# EUROPEAN PATENT APPLICATION

(11) **EP 4 757 381 A1**
(43) Date of publication of application: **10.06.2026**
(21) Application number: 23947025.5
(22) Date of filing: 31.07.2023
(51) Int. Cl.: H04W 24/02

(54) **METHOD FOR WIRELESS COMMUNICATION, TERMINAL DEVICE, AND NETWORK DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/110293
(87) International publication number: WO 2025/025076

(57) **Abstract**

A method for wireless communication, a terminal device, and a network device are provided. The method for wireless communication includes obtaining, by a terminal device, first information, where the first information is used to indicate transmission time periods and power-saving time periods of a first cell; and executing, by the terminal device, one or more of following operations based on the first information: a first operation related to a time alignment timer (TAT) of the terminal device; a second operation related to a hybrid automatic repeat request (HARQ) buffer of the terminal device; a third operation related to the terminal device triggering a buffer state report (BSR) and/or sending the BSR; a fourth operation related to transmission of the first information; a fifth operation related to uplink transmission delays of the terminal device; and a sixth operation related to the terminal device initiating random access.

## Description

### TECHNICAL FIELD

The present disclosure relates to the field of communication technology, and more specifically to a method for wireless communication, a terminal device, and a network device.

### BACKGROUND

In response to the issue of energy consumption, certain communication systems (such as new radio (NR) systems) have introduced network energy saving technologies. However, there are still some problems that exist in network energy saving scenarios.

### SUMMARY

The present disclosure provides a method for wireless communication, a terminal device, and a network device. Various aspects related to the present disclosure are described below.

According to a first aspect, a method for wireless communication is provided, including: obtaining, by a terminal device, first information, where the first information is used to indicate transmission time periods and power-saving time periods of a first cell; and executing, by the terminal device, one or more of following operations based on the first information: a first operation, where the first operation is related to a time alignment timer (TAT) of the terminal device; a second operation, where the second operation is related to a hybrid automatic repeat request (HARQ) buffer of the terminal device; a third operation, where the third operation is related to the terminal device triggering a buffer state report (BSR) and/or sending the BSR; a fourth operation, where the fourth operation is related to transmission of the first information; a fifth operation, where the fifth operation is related to uplink transmission delays of the terminal device; and a sixth operation, where the sixth operation is related to the terminal device initiating random access.

According to a second aspect, a method for wireless communication is provided, including: receiving, by a network device, a first buffer state report (BSR) sent by a terminal device, where the first BSR does not indicate first uplink data, and the first BSR is sent in a first transmission time period when the terminal device satisfies a first condition; where the first condition includes one or both of: a last transmission time corresponding to the first uplink data falling within a next transmission time period of the first transmission time period; and a time difference between the last transmission time corresponding to the first uplink data and a start time of the next transmission time period reaching a first time difference.

According to a third aspect, a method for wireless communication is provided, including: receiving, by a network device, first statistical information sent by a terminal device, where the first statistical information is used to indicate one or both of following uplink transmission delays of a first cell: a first uplink transmission delay, where the first uplink transmission delay is associated with power-saving time periods of the first cell; and a second uplink transmission delay, where the second uplink transmission delay is an uplink transmission delay other than the first uplink transmission delay in the uplink transmission delays.

According to a fourth aspect, a terminal device is provided, including: an obtaining module, configured to obtain first information, where the first information is used to indicate transmission time periods and power-saving time periods of a first cell; and an execution module, configured to execute one or more of following operations based on the first information: a first operation, where the first operation is related to a time alignment timer (TAT) of the terminal device; a second operation, where the second operation is related to a hybrid automatic repeat request (HARQ) buffer of the terminal device; a third operation, where the third operation is related to the terminal device triggering a buffer state report (BSR) and/or sending the BSR; a fourth operation, where the fourth operation is related to transmission of the first information; a fifth operation, where the fifth operation is related to uplink transmission delays of the terminal device; and a sixth operation, where the sixth operation is related to the terminal device initiating random access.

According to a fifth aspect, a network device is provided, including: a receiving module, configured to receive a first buffer state report (BSR) sent by a terminal device, where the first BSR does not indicate first uplink data, and the first BSR is sent in a first transmission time period when the terminal device satisfies a first condition; where the first condition includes one or both of: a last transmission time corresponding to the first uplink data falling within a next transmission time period of the first transmission time period; and a time difference between the last transmission time corresponding to the first uplink data and a start time of the next transmission time period reaching a first time difference.

According to a sixth aspect, a network device is provided, including: a first receiving module, configured to receive first statistical information sent by a terminal device, where the first statistical information is used to indicate one or both of following uplink transmission delays of a first cell: a first uplink transmission delay, where the first uplink transmission delay is associated with power-saving time periods of the first cell; and a second uplink transmission delay, where the second uplink transmission delay is an uplink transmission delay other than the first uplink transmission delay in the uplink transmission delays.

According to a seventh aspect, a terminal device is provided, including a processor, a memory, and a communication interface, where the memory is configured to store one or more computer programs, and the processor is configured to invoke the computer programs in the memory to cause the terminal device to perform some or all of the operations in the method according to the first aspect.

According to an eighth aspect, a network device is provided, including a processor, a memory, and a communication interface, where the memory is configured to store one or more computer programs, and the processor is configured to invoke the computer programs in the memory to cause the terminal device to perform some or all of the operations in the methods according to the second aspect and the third aspect.

According to a ninth aspect, a communication system is provided, including the above terminal device and/or network device. In another possible design, the system further includes other devices that interact with the terminal device or network device in the solutions provided in the embodiments of the present disclosure.

According to a tenth aspect, a computer-readable storage medium is provided, storing a computer program, where the computer program causes a computer to perform some or all of the operations in the methods according to various aspects.

According to an eleventh aspect, a computer program product is provided, including a non-transitory computer-readable storage medium that stores a computer program, where the computer program is executable to cause a computer to perform some or all of the operations in the methods according to various aspects. In some implementations, the computer program product may be a software installation package.

According to a twelfth aspect, a computer program is provided, where the computer program is executable to cause a computer to perform some or all of the operations in the methods according to various aspects.

According to a thirteenth aspect, a chip is provided, including a memory and a processor, where the processor is configured to invoke a computer program from the memory to perform some or all of the operations in the methods according to various aspects.

In the embodiments of the present disclosure, the terminal device executes one or more operations based on the first information, and the first information is used to indicate the transmission time periods and the power-saving time periods of the first cell, thereby helping to address some of the problems arising in the network energy saving scenario.

### BRIEF DESCRIPTION OF THE DRAWINGS

FIG. 1 is an example diagram of a system architecture of a wireless communication system to which an embodiment of the present disclosure is applicable.
FIG. 2 is an example diagram of a possible implementation of network energy saving.
FIG. 3 is an example diagram of data transmission with TAT expiring in a power-saving time period of a cell.
FIG. 4 is a schematic flowchart of a method for wireless communication according to Embodiment 1.
FIG. 5 is an example diagram of performing a first operation or a second operation according to Embodiment 1.
FIG. 6 is an example diagram of a terminal device reporting a BSR to a network device of an NES cell.
FIG. 7 is a schematic flowchart of a method for wireless communication according to Embodiment 2.
FIG. 8 is an example diagram of a terminal device reporting a BSR to a network device of an NES cell according to Embodiment 2.
FIG. 9 is a schematic flowchart of a method for wireless communication according to Embodiment 3.
FIG. 10 is a schematic flowchart of a method for wireless communication according to Embodiment 4.
FIG. 11 is a schematic structural diagram of a terminal device according to an embodiment of the present disclosure.
FIG. 12 is a schematic structural diagram of a network device according to an embodiment of the present disclosure.
FIG. 13 is another schematic structural diagram of a network device according to an embodiment of the present disclosure.
FIG. 14 is a schematic structural diagram of an apparatus for communication according to an embodiment of the present disclosure.

### DETAILED DESCRIPTION OF THE EMBODIMENTS

The following describes the technical solution in the present disclosure in combination with the attached drawings.

### COMMUNICATION SYSTEM ARCHITECTURE

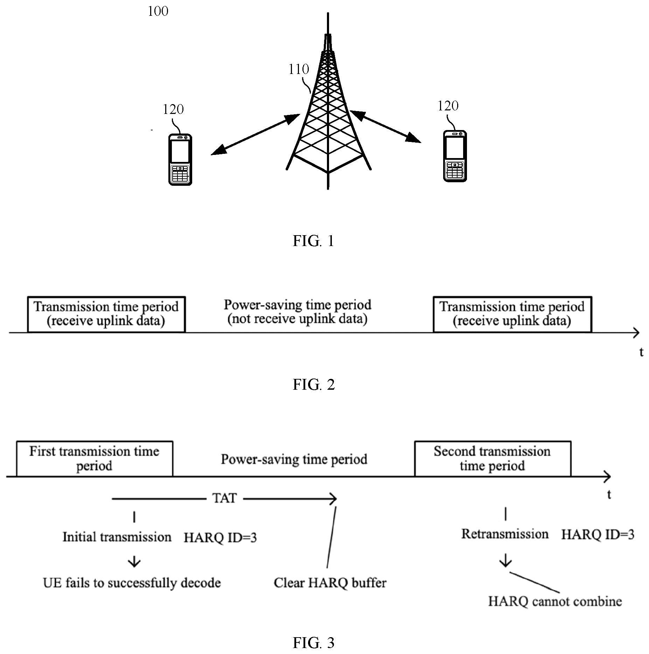

FIG. 1 is an example diagram of a system architecture of a wireless communication system 100 to which an embodiment of the present disclosure is applicable. The wireless communication system 100 includes a network device 110 and a terminal device 120, and the network device 110 may be a device that communicates with the terminal device 120. The network device 110 provides communication coverage for a particular geographic area and communicates with the terminal device 120 located within the coverage area.

FIG. 1 exemplarily shows a network device and two terminal devices. Optionally, the wireless communication system 100 may include a plurality of network devices, and the coverage of each network device may include other numbers of terminal devices, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal device. The network device may also be referred to as an access network device or a radio access network device, e.g., the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology and specific device form adopted by the network device are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

### NETWORK ENERGY SAVING (NES)

With the development of communication technology, wireless communication systems have significantly improved key indicators such as transmission rate, transmission delay, and connection scale, enabling a wider range of service scenarios and applications. However, the continuous development of wireless communication systems has also brought new challenges for operators, such as energy consumption issues. To address the problem of energy consumption, network energy saving technology (also referred to as network energy saving mechanisms) may be introduced as a possible implementation to reduce energy consumption.

Taking the 5G system (or NR system) as an example, the 5G system utilizes larger bandwidths and higher frequency bands, resulting in higher energy consumption of network devices compared to 4G systems. The energy consumption of network devices in the 5G system leads to higher electricity costs for operators. Additionally, due to the use of high frequency bands in the 5G system, the geographical coverage of a cell is relatively small, resulting in a limited number of terminal devices within the cell. Therefore, network energy saving technology may be introduced in the 5G system to reduce energy consumption.

There are various ways to achieve network energy saving, such as timely shutting down certain network devices or cells to achieve energy savings, or allowing network devices to refrain from receiving and/or transmitting data during certain time periods. Allowing network devices to refrain from receiving and/or transmitting data during certain time periods helps ensure that network devices concentrate data transmission within certain time periods while entering a dormant or sleep state during other time periods, thereby achieving the goal of saving energy consumed by network devices.

The following is an exemplary introduction to the implementation of network energy saving through the refraining of network devices from receiving and/or transmitting data during certain time periods, with reference to FIG. 2.

As shown in FIG. 2, for a cell, the time for the cell may be divided into transmission time periods and power-saving time periods (also referred to as energy-saving time periods, electricity-saving time periods, etc.). During the transmission time periods of the cell, the cell (or a network device corresponding to the cell) may normally receive uplink data. During the power-saving time periods of the cell, the cell (or the network device corresponding to the cell) may not receive uplink data.

It should be noted that, in some embodiments, the division of the transmission time periods and power-saving time periods is at a cell level. That is to say, transmission time periods and power-saving time periods may be configured separately for each cell.

It should also be noted that the cell (or the network device corresponding to the cell) not receiving uplink data mentioned in the embodiments of the present disclosure referring only to data and not to control information. For example, during the power-saving time periods of the cell, the cell (or the network device corresponding to the cell) does not receive uplink data but receives control information, such as random access preambles, scheduling requests (SR), etc. In some embodiments, during the power-saving time periods of the cell, the SRs received by the cell (or the network device corresponding to the cell) may be limited to those used for requesting resources for emergency services or high-priority services.

Furthermore, in some embodiments, prior to a power-saving time period of the cell, such as during a transmission time period adjacent to the power-saving time period, if the network device has already allocated dynamically scheduled uplink resources for a certain terminal device, the network device may still receive data transmitted by the terminal device using the allocated uplink resources.

In some embodiments, regardless of whether the uplink resources configured by the network device for the terminal device are used for transmitting new data or for data retransmission, the network device receives data transmitted using those uplink resources. For example, the network device allocates uplink resources for transmitting new data to the terminal device during a transmission time period adjacent to and before a power-saving time period, then even during the power-saving time period of the cell, the cell (or the network device corresponding to the cell) may still receive new data transmitted using those uplink resources.

FIG. 2 illustrates a case where the network device does not receive uplink data during the power-saving time periods of the cell. Similarly, the network device may also not send downlink data during the power-saving time periods of the cell.

In some embodiments, during the power-saving time periods of the cell, the network device may not send downlink data but may still normally send reference signals, such as synchronization signal blocks (SSB).

In some embodiments, during the power-saving time periods of the cell, the terminal device may not monitor a physical downlink control channel (PDCCH).

In some embodiments, during the power-saving time periods of the cell, the terminal device may not receive data on already allocated semi-static scheduled downlink resources.

Although the introduction of network energy saving technology can reduce energy consumption, there are still many issues that may arise in network energy saving scenarios.

To address this, embodiments of the present disclosure provide a method for wireless communication, a terminal device and a network device, to solve potential problems that may occur in the network energy saving scenarios.

In the embodiments of the present disclosure, the terminal device may obtain first information and execute one or more of first to sixth operations based on the first information. The first operation is related to a time alignment timer (TAT) of the terminal device. The second operation is related to a hybrid automatic repeat request (HARQ) buffer of the terminal device. The third operation is related to the terminal device triggering a buffer state report (BSR) and/or sending the BSR. The fourth operation is related to transmission of the first information. The fifth operation is related to uplink transmission delays of the terminal device. The sixth operation is related to the terminal device initiating random access.

It should be noted that the first information obtained by the terminal device may be used to indicate the transmission time periods and/or power-saving time periods of the first cell. A detailed introduction regarding the first information is provided below, which is not elaborated here.

It should also be noted that different issues that arise in the network energy saving scenarios may be addressed when the terminal device performs one or more of the above operations. For ease of understanding, the following introduces the potential issues that may arise in the network energy saving scenarios and corresponding solutions through Embodiments 1 to 5. In other words, the following introduces the potential issues that may arise in the network energy saving scenarios and corresponding operations performed by the terminal device through Embodiments 1 to 5.

It should be noted that each of the embodiments (Embodiments 1 to 5) described below may be used independently or in any combination. For example, Embodiment 1 may be used alone, or in combination with Embodiment 2, or with Embodiment 3, or with a combination of Embodiments 2 and 3, and so on. As another example, Embodiment 2 may be used alone, or in combination with Embodiment 3, or with Embodiment 4, or with a combination of Embodiments 3 and 4, and so on. Embodiments 1 to 5 may also be combined in other unlisted combinations, for brevity, which are not enumerated here.

### Embodiment 1

Embodiment 1 aims to address the problem of being unable to obtain retransmission combining gain due to the expiring of the TAT of the terminal device during the power-saving time periods of the cell. For ease of understanding, the problem is detailed below.

As mentioned above, during a time period when the network device does not transmit data (such as not receiving uplink data), specifically during a power-saving time period of the cell, there may be some data in a hybrid automatic repeat request (HARQ) buffer of the terminal device that has not been successfully transmitted. In this case, whether to retransmit the data during the power-saving time period of the cell falls under the implementation of the network device. As a possible implementation (Implementation 1), the network device may choose to continue retransmitting the data during the power-saving time period until the transmission of the data is completed. As another possible implementation (Implementation 2), the network device may choose not to continue retransmitting the data during the power-saving time period, but rather wait until a next transmission time period to retransmit the data.

In the case of Implementation 2, if the TAT of the terminal device expires during the power-saving time period of the cell, the terminal device may clear its HARQ buffer. This is because the TAT is used to control the duration for which the terminal device maintains uplink synchronization, the terminal device is considered to be in an uplink out-of-sync state after the TAT expires, and thus the terminal device will clear the HARQ buffer, treating each subsequent transmission of the processes in the HARQ buffer as an initial transmission. However, if the terminal device clears the HARQ buffer, the network device is unable to obtain retransmission combining gain when it retransmits the data during the next transmission time period.

FIG. 3 illustrates an example of data transmission in the case of TAT expiring during the power-saving time period of the cell. As shown in FIG. 3, during a first transmission time period, the network device transmits downlink data to the terminal device via HARQ process 3, but the terminal device fails to successfully decode the data. Subsequently, the network device enters the power-saving time period. If the network device does not retransmit the data of HARQ process 3 to the terminal device during the power-saving time period, then upon TAT expiring, the terminal device clears its HARQ buffer, including the data that was not successfully decoded in HARQ process 3. Then, the network device enters a second transmission time period. When the network device retransmits the data to the terminal device via HARQ process 3 during the second transmission time period, the terminal device is only able to decode the data independently, without HARQ combining, thus being unbale to obtain retransmission combining gain, which reduces the probability of successful decoding of the terminal device and affects data transmission of the terminal device.

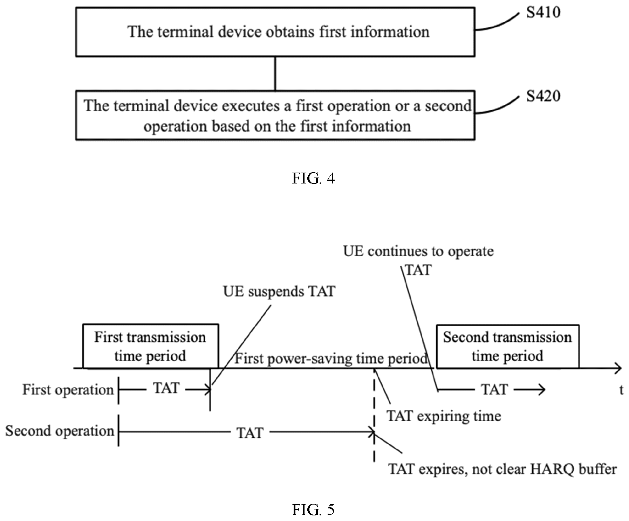

To address the above issue, Embodiment 1 provides a method for wireless communication that ensures the terminal device does not clear its HARQ buffer during the power-saving time period of the cell, thereby increasing the likelihood of the terminal device obtaining retransmission combining gain and improving the probability of successful decoding of the terminal device, further improving transmission behaviors of the terminal device under the network energy saving mechanism. The following introduces Embodiment 1 in conjunction with FIG. 4.

FIG. 4 is a schematic flowchart of a method for wireless communication in Embodiment 1. The method shown in FIG. 4 may be executed by a terminal device, such as the terminal device 120 shown in FIG. 1. The method shown in FIG. 4 may include operations S410 and S420, which are described below.

At operation S410, the terminal device obtains first information. In the embodiments of the present disclosure, the first information may be used to indicate transmission time periods and/or power-saving time periods of a first cell.

The first cell may be any cell, which is not limited in the embodiments of the present disclosure. For example, the first cell may be a serving cell of the terminal device or a neighbor cell. Alternatively, the first cell may be a primary cell of the terminal device, a secondary cell of the terminal device, or a primary secondary cell of the terminal device. It should be understood that the primary secondary cell mentioned in the embodiments of the present disclosure refer to a primary cell on a secondary network device (such as a secondary base station) corresponding to the terminal device in a dual connectivity scenario.

In some embodiments, the first cell may be an energy-saving cell (also referred to as a network energy saving (NES) cell).

In the embodiments of the present disclosure, the first cell may be divided into transmission time periods and power-saving time periods. During the transmission time periods of the first cell, the network device (i.e., the network device corresponding to the first cell) may normally receive uplink data and/or normally send downlink data. During the power-saving time periods of the first cell, the network device may not receive uplink data and/or may not send downlink data.

In some embodiments, transmission time periods and power-saving time periods may be configured separately for different cells. However, the embodiments of the present disclosure are not limited thereto, for example, the same transmission time periods and power-saving time periods may be configured for a plurality of cells, meaning that the transmission time periods and power-saving time periods configured for the plurality of cells may be the same.

In some embodiments, the network device not receiving uplink data and/or not sending downlink data refers only to data and not to control information. For example, the network device may not receive uplink data during the power-saving time periods of the first cell, but it may still receive control information such as preambles and SRs. For another example, the network device may not send downlink data during the power-saving time periods of the first cell, but it may send reference signals such as SSB.

In some embodiments, during the power-saving time periods of the cell, the terminal device may not monitor the PDCCH and/or may not receive data on already allocated semi-static scheduled downlink resources.

In some embodiments, a power-saving time period corresponding to the network device not receiving uplink data and a power-saving time period corresponding to the network device not sending downlink data may be the same. In other words, the power-saving time period corresponding to the network device not receiving uplink data and the power-saving time period corresponding to the network device not sending downlink data may be synchronized. However, the embodiments of the present disclosure are not limited thereto, in some embodiments, the power-saving time period corresponding to the network device not receiving uplink data and the power-saving time period corresponding to the network device not sending downlink data may be different, or in other words, the power-saving time period corresponding to the network device not receiving uplink data and the power-saving time period corresponding to the network device not sending downlink data may be unsynchronized.

The embodiments of the present disclosure do not limit the method for the terminal device to obtain the first information. Exemplarily, the first information may be configured (indicated or sent) to the terminal device by the network device. For example, the network device corresponding to the first cell may configure the first information to the terminal device, or the network device corresponding to the serving cell of the terminal device may configure first information corresponding to one or more cells to the terminal device.

The embodiments of the present disclosure do not limit the method for the network device to configure the first information. In some embodiments, the network device may configure the first information to the terminal device via broadcasting. In some embodiments, the network device may configure the first information to the terminal device through dedicated signaling.

The embodiments of the present disclosure do not limit the signaling that carries the first information. For example, the network device may configure the first information to the terminal device through one or more of: an RRC message, a MAC CE, and DCI.

At operation S420, the terminal device executes a first operation or a second operation based on the first information.

In some embodiments, both the first operation and the second operation are aimed at ensuring that the terminal device does not clear its HARQ buffer (or, in other words, does not clear data in the HARQ buffer) during the power-saving time periods of the first cell.

In some embodiments, the execution of the first operation or the second operation is triggered based on the following condition, i.e., when a transmission time period of the first cell ends, the TAT of the terminal device is in a running state. In other words, if the TAT of the terminal device is in the running state when the transmission time period of the first cell ends, the terminal device may execute the first operation or the second operation. The first operation and the second operation are described below.

In some embodiments, the first operation includes: the terminal device executing an operation on the TAT. For example, the terminal device executes a suspension operation on the TAT.

In some embodiments, the terminal device executing the suspension operation on the TAT may include: the terminal device suspending the TAT when a first transmission time period of the first cell ends. In other words, the terminal device may suspend the TAT when a power-saving time period (such as a first power-saving time period) of the first cell starts.

In some embodiments, the terminal device executing the suspension operation on the TAT may include: the terminal device suspending the TAT when the first transmission time period of the first cell ends, if the TAT of the terminal device is in a running state. In other words, the terminal device may suspend the TAT when the power-saving time period (such as the first power-saving time period) of the first cell starts, if the TAT of the terminal device is in the running state.

In some embodiments, the first transmission time period may be any transmission time period among the transmission time periods of the first cell, which is not limited in the embodiments of the present disclosure.

In some embodiments, the terminal device suspending the TAT may be understood as the terminal device not operating the TAT (e.g., temporarily not operating the TAT).

In some embodiments, after the terminal device suspends the TAT, the terminal device may continue to operate the TAT when a next transmission time period of the first transmission time period starts (or is reached, arrived, etc.). In other words, the terminal device may suspend the TAT during a power-saving time period between the first transmission time period and the next transmission time period of the first transmission time period, and continue to operate the TAT once the power-saving time period ends.

In some embodiments, the terminal device may suspend the TAT immediately after the first transmission time period ends. In some embodiments, the terminal device may suspend the TAT after a period of time following the end of the first transmission time period (while still within the power-saving time period adjacent to and following the first transmission time period). Taking the example where the first cell enters the first power-saving time period after the end of the first transmission time period, the terminal device may suspend the TAT immediately after the first transmission time period ends, or in other words, the terminal device may suspend the TAT as soon as it enters the first power-saving time period. Alternatively, the terminal device may suspend the TAT after a period of time has passed since entering the first power-saving time period, but at this time, the terminal device has not yet entered the next transmission time period of the first transmission time period.

It should be noted that the "period of time" mentioned above is less than a difference between a TAT expiring time and an end time of the first transmission time period. In other words, the terminal device suspends the TAT before the TAT expires.

In some embodiments, the terminal device may continue to operate the TAT as soon as the next transmission time period of the first transmission time period starts. In some embodiments, the terminal device may continue to operate the TAT after the next transmission time period of the first transmission time period has started and has lasted for a period of time (while still within the next transmission time period).

To facilitate understanding, an example of the terminal device executing the first operation is provided in conjunction with FIG. 5. In the example of FIG. 5, the next transmission time period of the first transmission time period is a second transmission time period, and a power-saving time period adjacent to and following the first transmission time period is a first power-saving time period. As shown in FIG. 5, the terminal device executing the first operation may refer to the terminal device suspending the TAT at the end of the first transmission time period, and then continuing to operate the TAT when the second transmission time period starts. In other words, the terminal device suspends the TAT when the first power-saving time period starts, and then continues to operate the TAT after the first power-saving time period ends.

It should be noted that the example in FIG. 5 illustrates the terminal device suspending the TAT immediately after the end of the first transmission time period, but in practice, it is also acceptable for the terminal device to suspend the TAT before the TAT expires. It should also be noted that the example in FIG. 5 illustrates the terminal device continuing to operate the TAT immediately after the end of the first power-saving time period (the start of the second transmission time period), but in practice, it is also acceptable for the terminal device to continue to operate the TAT within a period of time after the second transmission time period begins.

In some embodiments, the second operation includes: the terminal device skipping clearing data in the HARQ buffer.

In some embodiments, the terminal device skipping clearing the data in the HARQ buffer may refer to that the terminal device does not clear the data in the HARQ buffer if the TAT of the terminal device expires during the first power-saving time period. In other words, the second operation may include: the terminal device skipping clearing the data in the HARQ buffer if the TAT of the terminal device expires during the first power-saving time period.

In some embodiments, the second operation may be understood as the terminal device continuing to operate the TAT (not suspending the TAT) when a transmission time period adjacent to and before the first power-saving time period ends, and the terminal device not clearing the data in the HARQ buffer when the TAT expires during the first power-saving time period.

In some embodiments, the first power-saving time period may be any power-saving time period among the power-saving time periods of the first cell, which is not limited in the embodiments of the present disclosure.

In some embodiments, the terminal device skipping clearing the data in the HARQ buffer may refer to the terminal device skipping clearing the uplink HARQ buffer and/or the downlink HARQ buffer.

In some embodiments, when the TAT of the terminal device expires during the first power-saving time period, in addition to skipping clearing the data in the HARQ buffer, other handling of the TAT expiring may refer to existing protocols or existing technologies, which is not limited in the embodiments of the present disclosure.

To facilitate understanding, an example of the terminal device executing the second operation is provided in conjunction with FIG. 5. As shown in FIG. 5, the terminal device executing the second operation may refer to the terminal device skipping clearing the data in the HARQ buffer when the TAT expires during the first power-saving time period. For example, during the first power-saving time period, the terminal device does not clear the data in the HARQ buffer when the TAT reaches the expiration moment.

In some embodiments, the execution of the first operation or the second operation by the terminal device is predefined or preconfigured based on the protocol. In some embodiments, the execution of the first operation or the second operation by the terminal device is configured (determined, indicated) by the network device, which is not limited in the embodiments of the present disclosure. In other words, in some embodiments, the execution of the first operation or the second operation by the terminal device may be determined based on one or more of: protocol predefined information, configuration information of the network device, and indication information of the network device.

The embodiments of the present disclosure do not limit the method for the network device to configure the terminal device to execute the first operation or the second operation. For example, the network device may configure it through higher-layer signaling (such as RRC messages), or indicate through MAC CE or DCI, etc.

In some embodiments, if the network device configures the terminal device to execute the first operation or the second operation through an RRC message, the embodiments of the present disclosure do not limit the type of the RRC message. For example, the network device may configure it through a broadcast RRC message or through a dedicated RRC message, etc.

In some embodiments, if the network device instructs the terminal device to execute the first operation or the second operation through MAC CE or DCI, the embodiments of the present disclosure do not impose limitations on the MAC CE or DCI. For example, the network device may notify all terminal devices in a broadcast manner using MAC CE or DCI, or it may notify a specific terminal device in a dedicated manner using MAC CE or DCI, or it may notify a group of terminal devices (terminal device group) in a broadcast/multicast manner using MAC CE or DCI. In the embodiments of the present disclosure, the group of terminal devices may include one or more terminal devices. The embodiments of the present disclosure do not impose limitations on which specific terminal devices are included in the group. For example, the terminal devices included in the group may be configured by the network device through other processes (such as pre-configuration).

In Embodiment 1, during the power-saving time periods of the first cell, the terminal device is capable of suspending the TAT or skipping clearing the data in the HARQ buffer when the TAT expires. In this way, Embodiment 1 ensures that the terminal device does not clear the HARQ buffer during the power-saving time periods of the first cell, thereby increasing the likelihood of the terminal device obtaining retransmission combining gain and improving the probability of successful decoding, which is beneficial for improving the transmission behaviors of the terminal device under the network energy saving mechanism.

### Embodiment 2

Embodiment 2 aims to improve buffer state report (BSR) triggering and/or BSR reporting of the terminal device to enhance the power-saving performance of the NES cell while ensuring the effectiveness of data transmission. To facilitate understanding, the problems addressed by Embodiment 2 are introduced below.

Currently, if there is uplink data arriving at the terminal device (e.g., data at an application layer arriving at an access layer of the terminal device), the terminal device may trigger a BSR. Subsequently, if the terminal device obtains uplink transmission resources but cannot transmit all the data in the buffer, the terminal device may report the BSR. In related technologies, when reporting the BSR, the terminal device only reports the amount of data to be transmitted and does not report a valid duration of the data. Additionally, the terminal device reports the amount of all the to-be-transmitted data in the buffer in the BSR. In this case, after the NES network device receives the BSR reported by the terminal device, if the network device determines that it cannot complete the transmission of all the uplink data indicated by the BSR during the current transmission time period (e.g., the first transmission time period), the network device may take one of the following approaches to complete the transmission of the uplink data.

Approach 1: the network device may extend the current transmission time period of the NES cell for a period of time to complete the transmission of all the data to be transmitted in the buffer of the terminal device. This approach would lead to an increase in the transmission time of the cell, thereby reducing the power-saving effect of the NES cell.

Approach 2: the network device may not receive the data in the terminal device's buffer that has not yet been transmitted during the power-saving time period of the NES cell, or in other words, the network device may instruct the terminal device not to send the data in the terminal device's buffer that has not yet been transmitted during the power-saving time period of the NES cell, but rather wait until a next transmission time period to transmit the data. This approach would lead to an increase in the transmission delay of the data, potentially exceeding a valid duration of the data packet (or in other words, exceeding a maximum allowable delay for the data packet), thereby rendering the data useless upon arrival at the receiver and failing to ensure the effectiveness of data transmission.

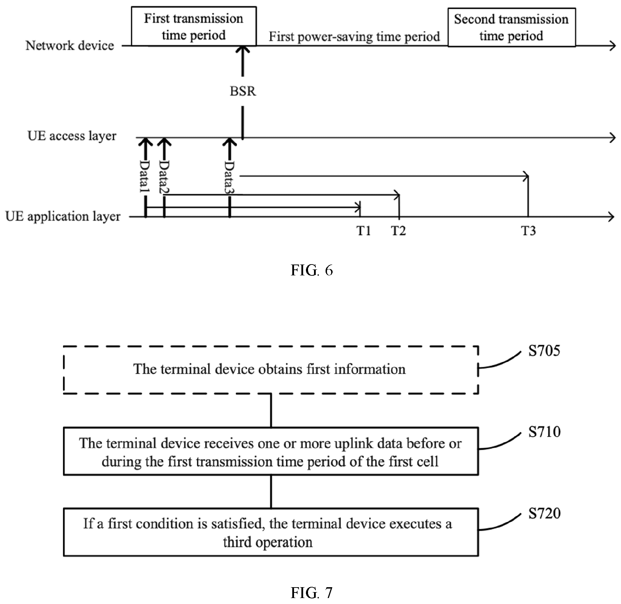

FIG. 6 illustrates an example of the terminal device reporting a BSR to the network device of the NES cell. As shown in FIG. 6, during the first transmission time period, when the terminal device reports the BSR to the network device, there are three portions of data in the terminal device's buffer, represented as Data 1, Data 2, and Data 3. Among these, last transmission times T1 and T2 corresponding to Data 1 and Data 2 fall within the power-saving time period (e.g., the first power-saving time period in FIG. 6) of the NES cell, and a last transmission time T3 corresponding to Data 3 occurs after the start of the second transmission time period. In this scenario, the terminal device may report the amounts of Data 1, Data 2, and Data 3 when reporting the BSR during the first transmission time period. After receiving the BSR reported by the terminal device, the network device cannot distinguish the last transmission times corresponding to these data packets. Therefore, the network device may adopt either Approach 1 or Approach 2 to complete the transmission of Data 1, Data 2, and Data 3. Regardless of which approach is taken to complete the transmission of Data 1, Data 2, and Data 3, there will be problems.

Based on this, Embodiment 2 provides a method for wireless communication that enhances the power-saving performance of the NES cell while ensuring the effectiveness of data transmission. The following introduces Embodiment 2 in conjunction with FIG. 7.

FIG. 7 is a schematic flowchart of a method for wireless communication in Embodiment 2. The method shown in FIG. 7 may be executed by a terminal device, such as the terminal device 120 shown in FIG. 1. The method illustrated in FIG. 7 may include operations S710 and S720, which are described below.

At operation S710, the terminal device receives one or more uplink data before or during the first transmission time period of the first cell. The one or more uplink data include first uplink data. In other words, the terminal device receives the first uplink data before or during the first transmission time period of the first cell, and the first uplink data is part or all of the one or more uplink data received by the terminal device before or during the first transmission time period.

In the embodiments of the present disclosure, the first uplink data may be understood as specific data among the one or more uplink data, or the first uplink data may be understood as data that meets certain specific conditions among the one or more uplink data. For example, the first uplink data may refer to data received before or during the first transmission time period, where a last transmission time of the data falls within a next transmission time period following the first transmission time period. Alternatively, the first uplink data may refer to data received before or during the first transmission time period, where the last transmission time of the data falls within the next transmission time period following the first transmission time period and there is a certain time difference between the last transmission time and a start time of the next transmission time period. In some embodiments, the time difference between the last transmission time of the first uplink data and the start time of the next transmission time period following the first transmission time period may be greater than or equal to a first time difference, and the first time difference is detailed later. For brevity, it is not elaborated here.

The first cell may be any cell, which is not limited in the embodiments of the present disclosure. For example, the first cell may be a serving cell of the terminal device. Alternatively, the first cell may be a primary cell of the terminal device, a secondary cell of the terminal device, or a primary secondary cell of the terminal device, etc.

In some embodiments, the first cell may be an energy-saving cell (also referred to as a network energy saving cell, i.e., NES cell).

In the embodiments of the present disclosure, the first cell may include transmission time periods and power-saving time periods in the time domain. During the transmission time periods of the first cell, the network device (i.e., the network device corresponding to the first cell) may normally receive uplink data and/or normally send downlink data. During the power-saving time periods of the first cell, the network device may not receive uplink data and/or send downlink data.

Further descriptions regarding the first cell, transmission time periods, and power-saving time periods may be found in the preceding text, and for the sake of brevity, they are not elaborated upon here.

In some embodiments, the first transmission time period may be any transmission time period among the transmission time periods of the first cell, which is not limited in the embodiments of the present disclosure.

In some embodiments, the terminal device receiving one or more uplink data may be understood as the access layer of the terminal device receiving one or more uplink data, or in other words, the one or more uplink data arriving at the access layer of the terminal device. For example, the terminal device receiving the one or more uplink data may refer to the access layer of the terminal device receiving the one or more uplink data from the application layer of the terminal device.

The embodiments of the present disclosure do not limit data types of the one or more uplink data. For example, the one or more uplink data may include video data, audio data, or any other type of data. In other words, the embodiments of the present disclosure do not limit a data type of the first uplink data. For example, the first uplink data may include video data, audio data, or any other type of data.

At operation S720, if a first condition is satisfied, the terminal device executes a third operation.

In some embodiments, the third operation is related to the terminal device triggering the BSR and/or sending the BSR (also referred to as reporting the BSR).

In some embodiments, the third operation is related to the triggering and/or reporting of the BSR for the first uplink data. For example, the third operation is related to the terminal device triggering the BSR for the first uplink data, or the third operation is related to the terminal device sending the BSR for the first uplink data.

In some embodiments, the third operation may include one or both of: the terminal device skipping triggering the BSR for the first uplink data; and the terminal device sending a first BSR during the first transmission time period, where the first BSR does not indicate the first uplink data.

In some embodiments, the third operation is executed when a first condition is satisfied. In other words, in some embodiments, the third operation may include one or both of: the terminal device skipping triggering the BSR for the first uplink data if the first condition is satisfied; and the terminal device sending the first BSR during the first transmission time period if the first condition is satisfied, where the first BSR does not indicate the first uplink data.

In some embodiments, the first BSR may be sent by the terminal device to the network device, for example, to the network device corresponding to the first cell.

In some embodiments, the first BSR sent by the terminal device during the first transmission time period is a BSR triggered for the first uplink data. However, the embodiments of the present disclosure are not limited thereto. In some embodiments, the first BSR may not be a BSR triggered for the first uplink data, but rather a BSR triggered for other uplink data, although the first BSR may also indicate information related to the first uplink data.

As an example, operation S720 may indicate that the terminal device does not trigger the BSR for the first uplink data if the first condition is satisfied. In other words, the terminal device does not trigger the BSR due to the first uplink data in the case that the first condition is satisfied.

As another example, operation S720 may indicate that the terminal device sends the first BSR during the first transmission time period if the first condition is satisfied, where the first BSR does not indicate the first uplink data. In other words, the terminal device does not indicate the first uplink data through the BSR during the first transmission time period in the case that the first condition is satisfied.

As yet another example, operation S720 may indicate that the terminal device neither triggers the BSR for the first uplink data nor indicates the first uplink data in the first BSR if the first condition is satisfied.

### The following describes the first condition.

In some embodiments, the first condition is related to one or more of: a last transmission time corresponding to the first uplink data, the next transmission time period of the first transmission time period, and the first time difference.

For example, the first condition may include one or both of: the last transmission time corresponding to the first uplink data falling within the next transmission time period of the first transmission time period; and a time difference between the last transmission time corresponding to the first uplink data and the start time of the next transmission time period of the first transmission time period reaching the first time difference.

As an example, the first condition may indicate that the last transmission time corresponding to the first uplink data falls within the next transmission time period of the first transmission time period. In other words, if the last transmission time corresponding to the first uplink data falls within the next transmission time period of the first transmission time period, the terminal device may execute the third operation.

As another example, the first condition may indicate that the last transmission time corresponding to the first uplink data falls within the next transmission time period of the first transmission time period, and the time difference between the last transmission time corresponding to the first uplink data and the start time of the next transmission time period of the first transmission time period reaches the first time difference. In other words, if the last transmission time corresponding to the first uplink data falls within the next transmission time period of the first transmission time period, and the time difference between the last transmission time corresponding to the first uplink data and the start time of the next transmission time period of the first transmission time period reaches the first time difference, the terminal device may execute the third operation.

Considering that it takes some time for the terminal device to report the BSR, the introduction of the first time difference is beneficial to ensure that the terminal device is able to report the BSR in the next transmission time period of the first transmission time period and transmit the uplink data indicated by the BSR within the valid duration of the data. In other words, to avoid reaching the last transmission time corresponding to the first uplink data shortly after the next transmission time period of the first transmission time period, the embodiments of the present disclosure consider reporting data within the first transmission time period regarding that the time difference between the last transmission time corresponding to the first uplink data and the start time of the next transmission time period of the first transmission time period does not reach the first time difference.

In some embodiments, the last transmission time corresponding to the first uplink data may be used to indicate a valid duration of the first uplink data, or in other words, the last transmission time corresponding to the first uplink data may be used to indicate a maximum allowable delay (or last transmission time) for the first uplink data. In other words, the transmission of the first uplink data needs to be completed before its corresponding last transmission time. If the transmission of the first uplink data is completed after this last transmission time, then the first uplink data is useless after reaching the receiver.

In some embodiments, when the terminal device receives the first uplink data, for example, when the access layer of the terminal device receives the first uplink data from the application layer, the last transmission time corresponding to the first uplink data may be determined.

In some embodiments, after the access layer of the terminal device receives the first uplink data from the application layer, it may count the number of uplink BSRs to be transmitted. If the first uplink data satisfies the first condition, the terminal device may not trigger the BSR for the first uplink data and/or may not indicate the first uplink data in the first BSR.

In some embodiments, the "reaching the first time difference" mentioned in the embodiments of the present disclosure may be understood as being greater than or equal to the first time difference. For example, the time difference between the last transmission time corresponding to the first uplink data and the start time of the next transmission time period of the first transmission time period reaching the first time difference may be understood as the time difference between the last transmission time corresponding to the first uplink data and the start time of the next transmission time period of the first transmission time period being greater than or equal to the first time difference.

The embodiments of the present disclosure do not limit the length (duration) of the first time difference, and the first time difference may be set arbitrarily based on characteristics of the communication system. For example, the length of the first time difference may be at a millisecond level, such as 1 millisecond, 5 milliseconds, etc. Alternatively, the length of the first time difference may be at a time slot or symbol level, such as 2 time slots, 14 symbols, etc.

In some embodiments, the length of the first time difference is less than a length of one transmission time period of the first cell (e.g., less than a length of the first transmission time period). In other words, the length of the first time difference may be any length less than the length of one transmission time period of the first cell. Exemplarily, the first time difference may be equal to half the length of one transmission time period of the first cell; or the first time difference may be equal to one-quarter of the length of one transmission time period of the first cell; or the first time difference may be equal to one-third of the length of one transmission time period of the first cell, and so on.

The embodiments of the present disclosure do not limit the configuration (determination) method of the first time difference. In some embodiments, the first time difference may be predefined by the protocol, or in other words, the first time difference may be determined based on protocol predefined information. In some embodiments, the first time difference may be configured by the network device, or in other words, the first time difference may be determined based on configuration information of the network device.

The embodiments of the present disclosure do not limit the implementation for the network device to configure the first time difference. Exemplarily, the network device may configure the first time difference through higher-layer signaling (such as RRC messages), or may indicate the first time difference through MAC CE or DCI, etc.

In some embodiments, if the network device configures the first time difference through an RRC message, the embodiments of the present disclosure do not limit the type of the RRC message. Exemplarily, the network device may configure the first time difference through a broadcast RRC message or through a dedicated RRC message, etc.

In some embodiments, if the network device indicates the first time difference through MAC CE or DCI, the embodiments of the present disclosure do not impose limitations on the MAC CE or DCI. Exemplarily, the network device may notify all terminal devices in a broadcast manner using MAC CE or DCI, or it may notify a specific terminal device in a dedicated manner using MAC CE or DCI, or it may notify a group of terminal devices (terminal device group) in a broadcast/multicast manner using MAC CE or DCI. In the embodiments of the present disclosure, the group of terminal devices may include one or more terminal devices. The embodiments of the present disclosure do not limit which specific terminal devices are included in this group; for example, the terminal devices included in this group may be configured by the network device through other processes (such as pre-configuration).

As mentioned above, in the case that the first condition is satisfied, the terminal device may not indicate the first uplink data in the first BSR. However, in certain cases, the terminal device may indicate the first uplink data in the first BSR. For example, in the case that the second condition is satisfied, the terminal device may indicate the first uplink data in the first BSR. In some embodiments, in the case that the second condition is satisfied, the terminal device may trigger a BSR for the first uplink data. In some embodiments, in the case that the second condition is satisfied, the terminal device may both trigger the BSR for the first uplink data and indicate the first uplink data in the first BSR.

### The following describes the second condition.

In some embodiments, the second condition may be related to one or more of: the last transmission time corresponding to the first uplink data, the next transmission time period of the first transmission time period, and the first time difference.

Exemplarily, the second condition may include one or both of the following: the last transmission time corresponding to the first uplink data falling before the next transmission time period of the first transmission time period; and the last transmission time corresponding to the first uplink data falling within the next transmission time period of the first transmission time period, and the time difference between the last transmission time corresponding to the first uplink data and the start time of the next transmission time period not reaching the first time difference.

As an example, the second condition may refer to the last transmission time corresponding to the first uplink data falling before the next transmission time period of the first transmission time period. In this case, the terminal device may indicate the first uplink data in the first BSR and/or trigger the BSR for the first uplink data.

As another example, the second condition may refer to the last transmission time corresponding to the first uplink data falling within the next transmission time period of the first transmission time period, and the time difference between the last transmission time corresponding to the first uplink data and the start time of the next transmission time period not reaching the first time difference. In this case, the terminal device may indicate the first uplink data in the first BSR and/or trigger the BSR for the first uplink data.

In some embodiments, the last transmission time corresponding to the first uplink data falling before the next transmission time period of the first transmission time period may refer to the last transmission time corresponding to the first uplink data falling within the first transmission time period. In some embodiments, the last transmission time corresponding to the first uplink data falling before the next transmission time period of the first transmission time period may refer to the last transmission time corresponding to the first uplink data falling within a power-saving time period between the first transmission time period and the next transmission time period, or in other words, the last transmission time corresponding to the first uplink data falling within a power-saving time period adjacent to and after the first transmission time period.

In some embodiments, the "not reaching the first time difference" mentioned in the embodiments of the present disclosure may be understood as being less than the first time difference. For example, the time difference between the last transmission time corresponding to the first uplink data and the start time of the next transmission time period of the first transmission time period not reaching the first time difference may be understood as the time difference between the last transmission time corresponding to the first uplink data and the start time of the next transmission time period of the first transmission time period being less than the first time difference.

Continuing to refer to FIG. 7, in some embodiments, the method shown in FIG. 7 may further include operation S705. At operation S705, the terminal device obtains first information. The first information may be used to indicate transmission time periods and/or power-saving time periods of the first cell.

Regarding the relevant introduction of operation S705, reference may be made to the previous description of operation S410, and for the sake of brevity, it is not repeated here.

As mentioned above, in some embodiments, if the first condition is satisfied, the terminal device does not trigger the BSR for the first uplink data. Therefore, how to subsequently trigger the BSR for the first uplink data is a problem that needs to be addressed. To address this problem, several possible implementations are provided below to enable the terminal device to trigger the BSR, such as triggering the BSR for the first uplink data.

As a possible implementation, the terminal device may trigger a BSR at a start time of each transmission time period of the first cell. In this way, the BSR for the first uplink data may be triggered at the start time of the next transmission time period of the first transmission time period.

As another possible implementation, if a third condition is satisfied at a start time of a second transmission time period of the first cell, the terminal device triggers the BSR.

The embodiments of the present disclosure do not limit the second transmission time period of the first cell, and the second transmission time period may be any one of the transmission time periods of the first cell. Exemplarily, the second transmission time period may be the next transmission time period of the first transmission time period, a previous transmission time period of the first transmission time period, or a transmission time period that is several transmission time periods apart from the first transmission time period, etc.

In some embodiments, the third condition may be related to the data in the terminal device's buffer. Exemplarily, the third condition may include one or more of: the buffer of the terminal device having data, the buffer of the terminal device having new data, the buffer of the terminal device having new data that is not reported to the network device, and an amount of data in the terminal device changing during the previous power-saving time period of the second transmission time period.

In some embodiments, the amount of data in the terminal device changing during the previous power-saving time period of the second transmission time period may include one or more of: new data arriving during the previous power-saving time period of the second transmission time period, data being deleted during the previous power-saving time period of the second transmission time period, etc.

As an example, the terminal device may determine at the start time of each transmission time period whether the buffer of the terminal device has data. If the terminal device determines that there is data in the terminal device's buffer, it may trigger the BSR.

As another example, the terminal device may determine at the start time of each transmission time period whether the buffer of the terminal device has new data. If the terminal device determines that there is new data in the terminal device's buffer, it may trigger the BSR.

As yet another example, the terminal device may determine at the start time of each transmission time period whether the buffer of the terminal device has new data. If the terminal device determines that there is new data in the terminal device's buffer that has not yet been reported to the network device, it may trigger the BSR.

As yet another example, the terminal device may determine at the start time of each transmission time period whether there is new data arriving during the previous power-saving time period. If the terminal device determines that there is new data arriving during the previous power-saving time period, it may trigger the BSR.

As yet another example, the terminal device may determine at the start time of each transmission time period whether there is data deleted during the previous power-saving time period. If the terminal device determines that there is data deleted during the previous power-saving time period, it may trigger the BSR.

In some embodiments, the third condition may further include other conditions related to the terminal device's buffer in addition to the above listed conditions. For example, the third condition may include that there is new data that has not yet been reported to the network device in the previous power-saving time period and/or previous transmission time period of the second transmission time period, and there is data that has been reported to the network device but deleted in the previous power-saving time period and/or previous transmission time period of the second transmission time period, etc.

As an example, the terminal device may determine at the start time of each transmission time period whether there is new data that has arrived in the previous power-saving time period and previous transmission time period and has not yet been reported to the network device. If so, the terminal device may trigger the BSR.

As another example, the terminal device may determine at the start time of each transmission time period whether certain data has been reported to the network device in the previous power-saving time period and previous transmission time period but has been deleted in the previous power-saving time period. If so, the terminal device may trigger the BSR.

In some embodiments, the method in Embodiment 2 may further include the following operations, i.e., when the terminal device enters a power-saving time period, the terminal device suspends a BSR-related timer. Alternatively, when the terminal device enters the power-saving time period, the terminal device may stop running the BSR-related timer. For example, each time the terminal device enters the power-saving time period, it may suspend the BSR-related timer. Alternatively, the terminal device may suspend the BSR-related timer during one or several instances of entering the power-saving time period.

The embodiments of the present disclosure do not limit the BSR-related timer. Exemplarily, the BSR-related timer may include, but is not limited to, one or more of: a periodic BSR timer (periodicBSR-Timer), a retransmission BSR timer (retxBSR-Timer), a logical channel scheduling request delay timer (logicalChannelSR-DelayTimer), and a logical channel scheduling request delay timer for small data transmission (sdt-LogicalChannelSR-DelayTimer).

In some embodiments, the periodic BSR timer may be used to periodically trigger the BSR.

In some embodiments, the retransmission BSR timer may retransmit the BSR upon expiring.

In some embodiments, for low-priority logical channels, the logical channel scheduling request delay timer may be used to delay sending the SR for a period of time. In some embodiments, for low-priority logical channels, the logical channel scheduling request delay timer may also be understood as being used to delay sending the BSR for a period of time.

In some embodiments, for low-priority logical channels, the logical channel scheduling request delay timer for small data transmission may be used to introduce an additional delay during small data transmission (SDT).

In some embodiments, when the terminal device enters the power-saving time period, whether the above BSR-related timer is suspended or stopped may be configured by the network device.

In some embodiments, the network device may configure whether each BSR-related timer is suspended or stopped when the terminal device enters the power-saving time period.

The embodiments of the present disclosure do not limit the implementation for the network device to configure whether the BSR-related timer is suspended or stopped. Exemplarily, the network device may configure this through higher-layer signaling (such as RRC messages), or indicate through MAC CE or DCI, etc.

In some embodiments, if the network device configures whether the BSR-related timer is suspended or stopped through an RRC message, the embodiments of the present disclosure do not limit the type of the RRC message. Exemplarily, the network device may configure this through a broadcast RRC message or a dedicated RRC message, etc.

In some embodiments, if the network device indicates whether the BSR-related timer is suspended or stopped through MAC CE or DCI, the embodiments of the present disclosure do not impose limitations on the MAC CE or DCI. Exemplarily, the network device may notify all terminal devices in a broadcast manner using MAC CE or DCI, or it may notify a specific terminal device in a dedicated manner using MAC CE or DCI, or it may notify a group of terminal devices (terminal device group) in a broadcast/multicast manner using MAC CE or DCI. In the embodiments of the present disclosure, the group of terminal devices may include one or more terminal devices. The embodiments of the present disclosure do not limit which specific terminal devices are included in the group. For example, the terminal devices included in the group may be configured by the network device through other processes (such as pre-configuration).

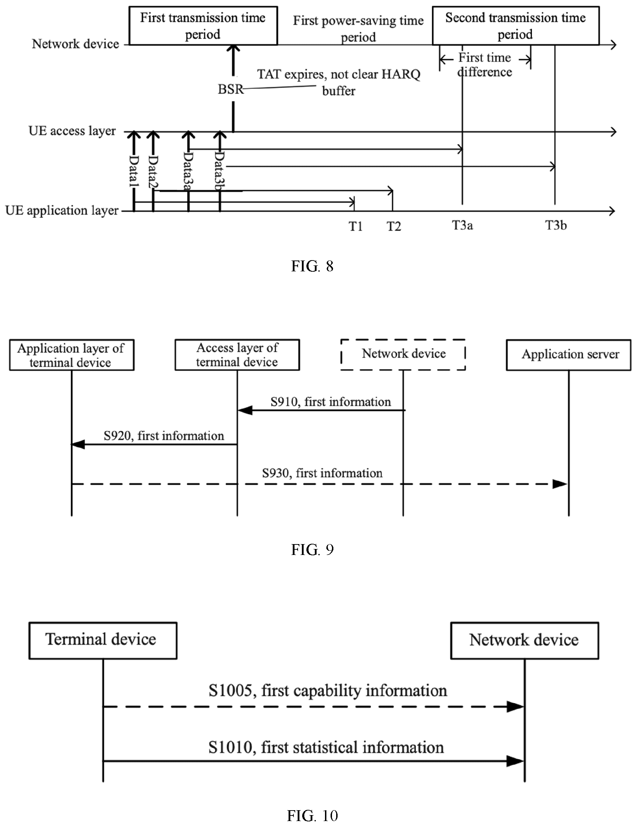

For ease of understanding, an example of Embodiment 2 is provided in conjunction with FIG. 8. In the example shown in FIG. 8, the next transmission time period of the first transmission time period is the second transmission time period. As shown in FIG. 8, when the terminal device generates and reports the BSR during the first transmission time period, there are four data packets in the terminal device's buffer, represented as Packet 1, Packet 2, Packet 3a, and Packet 3b. Among them, last transmission times corresponding to Packet 1 and Packet 2 are before the start time of the second transmission time period, so the terminal device needs to consider these two packets when reporting the BSR. Specifically, if these two packets can be transmitted through the uplink resources, then their data volume are not counted when reporting the BSR. If these two packets cannot be transmitted through the uplink resources or cannot be fully transmitted through the uplink resources, then the volume of untransmitted (non-transmissible) data needs to be included when reporting the BSR (e.g., including the number of untransmitted bits). Last transmission times corresponding to Packet 3a and Packet 3b are after the start time of the second transmission time period, where a time difference between the last transmission time corresponding to Packet 3a (such as T3a shown in FIG. 8) and the start time of the second transmission time period is less than the first time difference, and a time difference between the last transmission time corresponding to Packet 3b (such as T3b shown in FIG. 8) and the start time of the second transmission time period is greater than the first time difference. Therefore, if the terminal device sends the BSR during the first transmission time period, the BSR needs to include the volume of untransmitted data from Packet 3a (or referred to as the volume of data to be transmitted), but does not need to include the volume of untransmitted data from Packet 3b. In some embodiments, when Packet 3a arrives at the access layer of the terminal device, the terminal device may trigger the BSR (e.g., trigger the BSR for Packet 3a) if other conditions are satisfied; whereas when Packet 3b arrives at the access layer of the terminal device, the terminal device does not trigger the BSR (e.g., trigger the BSR for Packet 3b).

In Embodiment 2, after the terminal device receives the first uplink data, it may determine whether to trigger the BSR for the first uplink data and/or whether to indicate the first uplink data in the BSR based on the first condition, which helps to avoid the terminal device from reporting "data that could have been transmitted in the next transmission time period" using the BSR, thereby improving the energy-saving performance of the NES cell as much as possible while ensuring the effectiveness of data transmission.

### Embodiment 3

Embodiment 3 aims to reduce the duration of data storage in the terminal device's buffer, thereby helping to lower the data transmission delay. To facilitate understanding, the problems addressed by Embodiment 3 are introduced first.

Currently, neither an application layer of the terminal device nor an application layer on the network side is aware of the transmission time periods and/or power-saving time periods of the cell (energy-saving cell). This may lead to the application layer generating data packets without considering the transmission time periods of the wireless network. As a result, if the application layer generates data packets during the power-saving time periods of the cell, these data packets may need to be buffered for a longer time to be transmitted when they reach the access layer, increasing the data transmission delay.

Additionally, for some low-capacity terminal devices (such as NB IoT devices), if their buffer space is limited, they may be unable to cache the data generated by the application layer, leading to data loss.

To address the above problems, an embodiment of the present disclosure provides a method for wireless communication that ensures the application layer considers information regarding the transmission time periods and/or power-saving time periods of the cell when generating data packets, and reduces the duration of data storage in a buffer of an access layer based on this information, thereby helping to lower the data transmission delay. The following introduces Embodiment 3 in conjunction with FIG. 9.

FIG. 9 is a schematic flowchart of the method for wireless communication provided in Embodiment 3. The method shown in FIG. 9 may be executed by a terminal device, such as the terminal device 120 shown in FIG. 1. The method illustrated in FIG. 9 may include operations S910 and S920, which are described below.

At operation S910, an access layer of the terminal device obtains first information. In the embodiments of the present disclosure, the first information may be used to indicate transmission time periods and/or power-saving time periods of the first cell.

The embodiments of the present disclosure do not limit the method for the access layer of the terminal device to obtain the first information. For example, the first information may be sent from the network device to the access layer of the terminal device. It should be noted that FIG. 9 illustrates an example where the network device sends the first information to the terminal device, but the terminal device may also obtain the first information through other means.

Regarding the relevant introduction of operation S910, reference may be made to the previous description of operation S410, and for the sake of brevity, it is not repeated here.

After operation S910, the terminal device may perform a fourth operation. In some embodiments, the fourth operation may include: the access layer of the terminal device transmitting the first information to the application layer of the terminal device. The following describes the method shown in FIG. 9 taking the fourth operation includes that the access layer of the terminal device transmits the first information to the application layer of the terminal device as an example.

At operation S920, the access layer of the terminal device transmits the first information to the application layer of the terminal device.

In some embodiments, the implementation of operation S920 belongs to inter-layer primitives. In other words, the access layer of the terminal device notifying the application layer of the first information belongs to inter-layer primitives.

In some embodiments, after the application layer of the terminal device receives the first information, it may adjust the timing of generating uplink data (such as uplink packets) based on the first information, thereby avoiding sending uplink data to the access layer of the terminal device during the power-saving time periods.

In some embodiments, after the application layer of the terminal device receives the first information, it may further transmit the first information to an application server to prevent the application server from sending downlink data to the network device during the power-saving time periods of the first cell. The following continues to describe this in conjunction with FIG. 9.

Continuing with FIG. 9, in some embodiments, the method shown in FIG. 9 may further include operation S930. At operation S930, the application layer of the terminal device transmits the first information to the application server.

In some embodiments, the application server may refer to an application server on the network side or a third-party application server.

In some embodiments, the notification at operation S930 belongs to a control message of the application layer.

It should be noted that there are many ways to notify the application server of the first information, and operation S930 is just one possible implementation. In other implementations, for example, the network device may directly transmit the first information to the application server, etc.

In Embodiment 3, the access layer of the terminal device may report the first information (i.e., time window configuration information of the first cell, such as the first information used to indicate the transmission time periods and/or power-saving time periods of the first cell) to the application layer of the terminal device, enabling the application layer to determine the timing for generating data based on the first information. This reduces the duration of data storage in the access layer of the terminal device, thereby lowering the overall data transmission delay. In some embodiments, the application layer of the terminal device determining the timing for generating data based on the first information may refer to that the application layer of the terminal device may enable the timing for generating data to align or synchronize with the transmission time periods of the first cell as much as possible based on the first information, for example, the application layer of the terminal device may generate data and/or send data to the access layer of the terminal device as much as possible during the transmission time periods of the first cell.

### Embodiment 4

Embodiment 4 aims to ensure that the terminal device reports fine transmission delay statistic results to assist the network device in improving network configurations. To facilitate understanding, the problems addressed by Embodiment 4 are introduced first.

Currently, the network device may collect information related to data transmission delays (i.e., quality of experience (QoE)). Subsequently, the network device may adjust its transmission strategies based on this statistical information. In some embodiments, the network device may further report this statistical information to a network management platform or other platforms so that the relevant platforms may adjust the transmission strategies on the network side. However, the data transmission delay information currently collected by the network device is relatively coarse, which may lead to a situation where the network device, after adjusting its transmission strategies based on the statistical information, fails to achieve the effect of improving network configurations.

Based on this, Embodiment 4 provides a method for wireless communication that ensures the terminal device reports fine transmission delay statistic results, thereby assisting the network device in improving network configurations. In Embodiment 4, the terminal device may execute a fifth operation based on the first information to report fine transmission delay statistic results via the fifth operation.

In some embodiments, the fifth operation may include: the terminal device sending first statistical information to the network device. The first statistical information may be used to indicate a fine transmission delay statistic result of the first cell.

To facilitate understanding, the following provides a more detailed introduction to Embodiment 4 in conjunction with FIG. 10.

FIG. 10 is a schematic flowchart of the method for wireless communication provided in Embodiment 4. The method shown in FIG. 10 is described from the perspective of the interaction between the terminal device and the network device. The terminal device and network device may be, for example, the terminal device 120 and network device 110 shown in FIG. 1. The method illustrated in FIG. 10 may include operation S1010, which is described below.

At operation S1010, the terminal device sends the first statistical information to the network device. In some embodiments, operation S1010 may be understood as the fifth operation executed by the terminal device.

In the embodiments of the present disclosure, the first statistical information is related to uplink transmission delays of the first cell. The first cell may be an NES cell. For a description of the first cell, reference may be made to the previous text, and for the sake of brevity, it is not repeated here.

In some embodiments, the first statistical information may be used to indicate transmission delays of uplink data packets. In other words, the first statistical information may be used to indicate transmission delays of uplink data packets (i.e., the uplink transmission delays).

In some embodiments, the "uplink transmission delay" mentioned in the embodiments of the present disclosure refers to a transmission delay from the time an uplink data packet arrives at the access layer of the terminal device until the data packet is successfully transmitted to the network device.

The embodiments of the present disclosure do not limit the content of the first statistical information. Taking the first statistical information used to indicate transmission delays of uplink data packets as an example, the first statistical information may include one or more of: an average transmission delay of uplink data packets, a maximum transmission delay of uplink data packets, a minimum transmission delay of uplink data packets, a variance of transmission delays of uplink data packets, etc.

In some embodiments, both the terminal device and the network device need to collect statistics on the transmission delays of data packets. For example, the terminal device collects statistics on the transmission delays of uplink data packets (i.e., the first terminal device determines the first statistical information), and the network device collects statistics on transmission delays of downlink data packets. In some embodiments, after the terminal device and/or network device collects statistics on the transmission delays of data packets, the relevant statistical information may be reported to a network management platform or other management network elements to allow the network management platform or other management network elements to adjust network-side configuration parameters to improve network performance.

In some embodiments, the first statistical information may be used to indicate one or more of the following uplink transmission delays of the first cell: a first uplink transmission delay and a second uplink transmission delay. For example, the first statistical information may be used to indicate the first uplink transmission delay. Alternatively, the first statistical information may be used to indicate the second uplink transmission delay. Alternatively, the first statistical information may be used to indicate both the first uplink transmission delay and the second uplink transmission delay.

In some embodiments, the first uplink transmission delay is associated with the power-saving time periods of the first cell.

In some embodiments, the first uplink transmission delay may be understood as an uplink transmission delay caused by the power-saving time periods of the first cell. In other words, in some embodiments, the first uplink transmission delay associated with the power-saving time periods of the first cell may refer to the uplink transmission delay caused by the power-saving time periods of the first cell.

In some embodiments, the first uplink transmission delay may be determined based on a first duration. The first duration is a duration during which uplink data is stored in the terminal device's buffer and the first cell is in the power-saving time periods.

In some embodiments, if the uplink data is stored in the terminal device's buffer for a plurality of power-saving time periods, the above first duration needs to be counted into a duration of the plurality of power-saving time periods.

In some embodiments, the second uplink transmission delay may be understood as an uplink transmission delay other than the first uplink transmission delay in the uplink transmission delays.

In some embodiments, the second uplink transmission delay is associated with the transmission time periods of the first cell.

In some embodiments, the second uplink transmission delay may be understood as an uplink transmission delay caused by the transmission time periods of the first cell. In other words, the second uplink transmission delay associated with the transmission time periods of the first cell may refer to the uplink transmission delay caused by the transmission time periods of the first cell.

In some embodiments, the second uplink transmission delay may be determined based on a second duration. The second duration is a duration during which uplink data is stored in the terminal device's buffer and the first cell is in the transmission time periods.

In some embodiments, if the uplink data is stored in the terminal device's buffer for a plurality of transmission time periods, the above second duration needs to be counted into a duration of the plurality of transmission time periods.

In some embodiments, when the terminal device determines the first statistical information, it may separately collect statistics on the first uplink transmission delay and the second uplink transmission delay and separately report them.

In some embodiments, whether the uplink transmission delays included in the first statistical information include the first uplink transmission delay and the second uplink transmission delay is determined based on configuration information of the network device. In other words, whether the terminal device separately collects statistics on (or separately reports) the first uplink transmission delay and the second uplink transmission delay may be configured by the network device.

In some embodiments, the network device configuring whether the terminal device separately collects statistics on (or separately reports) the first uplink transmission delay and the second uplink transmission delay may refer to a base station or core network element configuring whether the terminal device separately collects statistics on (or separately reports) the first uplink transmission delay and the second uplink transmission delay, or may also refer to the network management platform (network platform) configuring whether the terminal device separately collects statistics on (or separately reports) the first uplink transmission delay and the second uplink transmission delay.

In some embodiments, whether the terminal device is capable of separately collecting statistics on (or separately reporting) the first uplink transmission delay and the second uplink transmission delay is a capability of the terminal device. The following continues to introduce this in conjunction with FIG. 10.

Continuing to refer to FIG. 10, in some embodiments, the method shown in FIG. 10 may further include operation S1005. At operation S1005, the terminal device sends first capability information to the network device. The first capability information may be used to indicate to the network device whether the terminal device is capable of collecting statistics on the first uplink transmission delay and the second uplink transmission delay.

As one implementation, when the terminal device is capable of collecting statistics on the first uplink transmission delay and the second uplink transmission delay, the terminal device may send the first capability information to the network device to indicate that the terminal device is capable of collecting statistics on the first uplink transmission delay and the second uplink transmission delay. Conversely, if the terminal device is not capable of collecting statistics on the first uplink transmission delay and the second uplink transmission delay, it may not send the first capability information to the network device.

As another implementation, regardless of whether the terminal device is capable of collecting statistics on the first uplink transmission delay and the second uplink transmission delay, the terminal device may still send the first capability information to the network device, where the first capability information is used to indicate whether the terminal device is capable of collecting statistics on the first uplink transmission delay and the second uplink transmission delay.

As an example, the first capability information may utilize 1 bit to indicate whether the terminal device is capable of collecting statistics on the first uplink transmission delay and the second uplink transmission delay. For example, when the first capability information indicates "1," it signifies that the terminal device is capable of collecting statistics on the first uplink transmission delay and the second uplink transmission delay; when the first capability information indicates "0," it signifies that the terminal device is not capable of collecting statistics on the first uplink transmission delay and the second uplink transmission delay. However, the embodiments of the present disclosure are not limited thereto. For example, when the first capability information indicates "1," it signifies that the terminal device is not capable of collecting statistics on the first uplink transmission delay and the second uplink transmission delay; when the first capability information indicates "0," it signifies that the terminal device is capable of collecting statistics on the first uplink transmission delay and the second uplink transmission delay.

As another example, the first capability information may utilize a plurality of bits to indicate whether the terminal device is capable of collecting statistics on the first uplink transmission delay and the second uplink transmission delay. For example, if the first capability information indicates "true" or "capable of collecting statistics on the first uplink transmission delay and the second uplink transmission delay," it signifies that the terminal device is capable of collecting statistics on the first uplink transmission delay and the second uplink transmission delay. Conversely, if the first capability information indicates "false" or "not capable of collecting statistics on the first uplink transmission delay and the second uplink transmission delay," it signifies that the terminal device is not capable of collecting statistics on the first uplink transmission delay and the second uplink transmission delay.

The embodiments of the present disclosure do not impose restrictions on the execution order of operations S1005 and S1010. For example, operation S1005 may be executed before operation S1010, or operation S1005 may also be executed after operation S1010.

In Embodiment 4, after the terminal device reports the first uplink transmission delay and the second uplink transmission delay (i.e., reports the fine delay statistic result), the network device may improve network configurations based on the statistic result.

In some embodiments, if the uplink transmission delays are caused by the power-saving time periods, the network device may adjust the configuration of the power-saving time periods, such as adjusting the distribution of the power-saving time periods and transmission time periods of the first cell.

In some embodiments, if the uplink transmission delays are caused by other time periods outside the power-saving time periods, or in other words, if the uplink transmission delays are not due to the power-saving time periods, the network device may improve scheduling decisions of the air interface, air interface parameters, etc. For example, if the uplink transmission delays are caused by a plurality of HARQ retransmissions within the transmission time periods, the network device may adjust its scheduling strategy to reduce a block error rate (BLER) for each transmission.

In summary, in Embodiment 4, the terminal device's capability of separately collecting statistics on and reporting the first uplink transmission delay and the second uplink transmission delay allows the network device to improve network configurations based on the first uplink transmission delay and the second uplink transmission delay, respectively. In other words, the terminal device separately collecting statistics on and reporting the first uplink transmission delay and the second uplink transmission delay may assist the network device in improving network configurations.

### Embodiment 5

Embodiment 5 aims to address a problem that random access initiated by the terminal device affects the power-saving performance of the network device in a network energy-saving scenario. For example, when the first cell is in a power-saving time period, random access initiated by the terminal device may affect the power-saving performance of the network device.

To address the above problem, Embodiment 5 provides a method for wireless communication, enabling the terminal device to execute a sixth operation based on first information, which helps to prevent the terminal device from arbitrarily initiating random access. The sixth operation is described in detail below.

In some embodiments, the sixth operation may include: the terminal device skipping initiating random access during the power-saving time periods of the first cell.

In some embodiments, the terminal device skipping initiating random access during the power-saving time periods of the first cell may refer to that the terminal device does not initiate random access if the terminal device is in a radio link failure state within the power-saving time periods of the first cell. In other words, if the terminal device determines that radio link quality is in the wireless link failure state during the power-saving time periods of the first cell, the terminal device may not initiate random access.

In some embodiments, the sixth operation further includes: the terminal device initiating random access during the transmission time periods of the first cell. That is to say, the terminal device may choose to initiate random access during time periods when the first cell normally transmits and receives data, and not initiate random access during time periods when the first cell cannot normally transmit and receive data.

In some embodiments, the sixth operation may include: the terminal device skipping initiating random access if the terminal device is in a radio link failure state within the power-saving time periods of the first cell, and subsequently, the terminal device initiating random access after entering the transmission time periods of the first cell.

In some embodiments, the terminal device may initiate random access immediately after entering a transmission time period of the first cell. In some embodiments, the terminal device may wait for a period of time after entering a transmission time period of the first cell before initiating random access.

In some embodiments, the sixth operation may include: the terminal device skipping initiating random access if the terminal device is in a radio link failure state within the power-saving time periods of the first cell, and subsequently, the terminal device skipping initiate random access during the transmission time periods of the first cell if radio link quality of the terminal device is restored within the power-saving time periods of the first cell.

In some embodiments, the terminal device may continuously monitor the radio link quality during the power-saving time periods of the first cell, and if it is determined that the radio link quality of the terminal device is restored during the power-saving time periods of the first cell, the terminal device skips initiating random access during the transmission time periods of the first cell.

In some embodiments, whether the radio link quality of the terminal device is restored is determined based on a condition for restoring the radio link quality of the terminal device.

In some embodiments, the condition for restoring the radio link quality of the terminal device is associated with or related to a number of downlink synchronization indications (INSYNC) monitored by the terminal device.

For example, the condition for restoring the radio link quality of the terminal device may include one or more of: the number of downlink synchronization indications being greater than a first threshold; a number of consecutive downlink synchronization indications being greater than a second threshold; and a number of downlink synchronization indications within one time window being greater than a third threshold.

In some embodiments, the first threshold, second threshold, and third threshold may be the same.

In some embodiments, the first threshold, second threshold, and third threshold may be at least partially different. For example, the first threshold, second threshold, and third threshold may all be different. Alternatively, the first threshold may be the same as the second threshold, but different from the third threshold, etc.

The embodiments of the present disclosure do not impose limitations on a length of a time window, which may be set arbitrarily based on actual needs. For example, the length of the time window may be 5 milliseconds, 10 milliseconds, or 2 slots, etc.

The embodiments of the present disclosure do not impose limitations on the configuration method of the length of the time window. For example, the length of the time window may be predefined by the protocol, configured by the network device, or determined based on the implementation of the terminal device, etc.

The embodiments of the present disclosure do not impose limitations on the configuration method of the condition for the recovery of the wireless link quality of the terminal device. For example, the conditions for the recovery of the wireless link quality of the terminal device may be predefined by the protocol or configured by the network device, etc. In other words, the condition for restoring the radio link quality of the terminal device may be determined based on protocol predefined information or configuration information of the network device.

Embodiment 5 ensures that the terminal device does not initiate random access during the power-saving time periods of the first cell, thereby helping to avoid the impact on the power-saving performance of the network device.

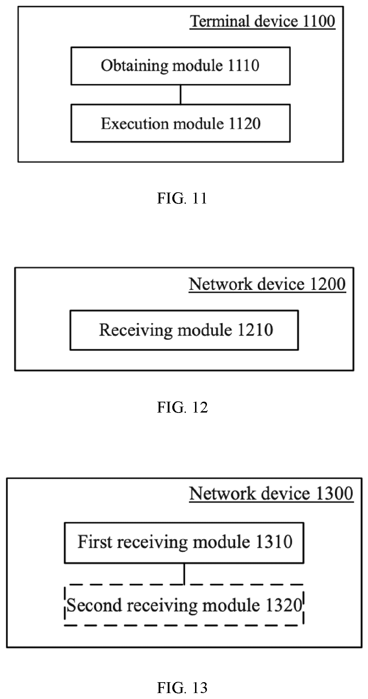

The method embodiments of the present disclosure are described in detail above with reference to FIG. 1 to FIG. 10, and the apparatus embodiments of the present disclosure are described in detail below with reference to FIG. 11 to FIG. 14. It should be understood that descriptions of the method embodiments correspond to descriptions of the apparatus embodiments, and therefore, reference may be made to the foregoing method embodiments for parts that are not described in detail.

FIG. 11 is a schematic structural diagram of a terminal device according to an embodiment of the present disclosure. The terminal device 1100 shown in FIG. 11 may include an obtaining module 1110 and an execution module 1120.

The obtaining module 1110 may be configured to obtain first information. The first information is used to indicate transmission time periods and power-saving time periods of a first cell.

The execution module 1120 may be configured to execute one or more of following operations based on the first information: a first operation, where the first operation is related to a time alignment timer (TAT) of the terminal device; a second operation, where the second operation is related to a hybrid automatic repeat request (HARQ) buffer of the terminal device; a third operation, where the third operation is related to the terminal device triggering a buffer state report (BSR) and/or sending the BSR; a fourth operation, where the fourth operation is related to transmission of the first information; a fifth operation, where the fifth operation is related to uplink transmission delays of the terminal device; and a sixth operation, where the sixth operation is related to the terminal device initiating random access.

Optionally, the first operation includes: executing, by the terminal device, a suspension operation on the TAT.

Optionally, the executing, by the terminal device, the suspension operation on the TAT includes: suspending, by the terminal device, the TAT when a first transmission time period of the first cell ends; or suspending, by the terminal device, the TAT when the first transmission time period of the first cell ends, if the TAT of the terminal device is in a running state.

Optionally, the first operation further includes: continuing, by the terminal device, to run the TAT when a next transmission time period of the first transmission time period starts.

Optionally, the second operation includes: skipping, by the terminal device, clearing data in the HARQ buffer.

Optionally, the skipping, by the terminal device, clearing the data in the HARQ buffer includes: skipping, by the terminal device, clearing the data in the HARQ buffer if the TAT of the terminal device expires in a first power-saving time period.

Optionally, the terminal device executing the first operation or the second operation is determined based on one or more of: protocol predefined information; configuration information of a network device; and indication information of the network device.

Optionally, the third operation includes: skipping, by the terminal device, triggering the BSR for first uplink data; and/or sending, by the terminal device, a first BSR in a first transmission time period, where the first BSR does not indicate the first uplink data; where the first uplink data is received by the terminal device in the first transmission time period or before the first transmission time period.

Optionally, the third operation is executed when a first condition is satisfied, and the first condition includes one or both of: a last transmission time corresponding to the first uplink data falling within a next transmission time period of the first transmission time period; and a time difference between the last transmission time corresponding to the first uplink data and a start time of the next transmission time period reaching a first time difference.

Optionally, the first BSR indicates the first uplink data if a second condition is satisfied, and the second condition includes one or both of: a last transmission time corresponding to the first uplink data falling before a next transmission time period of the first transmission time period; and the last transmission time corresponding to the first uplink data falling within the next transmission time period of the first transmission time period, and a time difference between the last transmission time corresponding to the first uplink data and a start time of the next transmission time period not reaching a first time difference.

Optionally, the first time difference is determined based on protocol predefined information or configuration information of a network device.

Optionally, the terminal device further includes: a first triggering module, configured to trigger the BSR at a start time of each of transmission time periods of the first cell.

Optionally, the terminal device further includes: a second triggering module, configured to trigger the BSR at a start time of a second transmission time period of the first cell if a third condition is satisfied; where the third condition includes one of: a buffer of the terminal device having data; the buffer of the terminal device having new data; new data arriving during a previous power-saving time period of the second transmission time period; and data being deleted during the previous power-saving time period of the second transmission time period.

Optionally, the terminal device further includes: a suspending module, configured to suspend a BSR-related timer when the terminal device enters the power-saving time periods.

Optionally, the BSR-related timer includes one or more of: a periodic BSR timer; a retransmission BSR timer; a logical channel scheduling request delay timer; and a logical channel scheduling request delay timer for small data transmission.

Optionally, the first information is obtained by an access layer of the terminal device, and the fourth operation includes: transmitting, by the access layer of the terminal device, the first information to an application layer of the terminal device.

Optionally, the terminal device further includes: a first transmission module, configured to transmit the first information from the application layer of the terminal device to an application server.

Optionally, the first information is carried in an RRC message, a MAC CE, or DCI.

Optionally, the fifth operation includes: sending, by the terminal device, first statistical information to a network device, where the first statistical information is used to indicate one or both of following uplink transmission delays of the first cell: a first uplink transmission delay, where the first uplink transmission delay is associated with the power-saving time periods of the first cell; and a second uplink transmission delay, where the second uplink transmission delay is an uplink transmission delay other than the first uplink transmission delay in the uplink transmission delays.

Optionally, the first uplink transmission delay is an uplink transmission delay caused by the power-saving time periods of the first cell.

Optionally, the first uplink transmission delay is determined based on a first duration, and the first duration is a duration during which uplink data is stored in a buffer of the terminal device and the first cell is in the power-saving time periods.

Optionally, the second uplink transmission delay is determined based on a second duration, and the second duration is a duration during which uplink data is stored in a buffer of the terminal device and the first cell is in the transmission time periods.

Optionally, whether the uplink transmission delays include the first uplink transmission delay and the second uplink transmission delay is determined based on configuration information of the network device.

Optionally, the terminal device further includes: a sending module, configured to send first capability information to the network device, where the first capability information is used to indicate that the terminal device is capable of collecting statistics on the first uplink transmission delay and the second uplink transmission delay.

Optionally, the sixth operation includes: skipping, by the termina device, initiating the random access within the power-saving time periods of the first cell.

Optionally, the skipping, by the termina device, initiating the random access within the power-saving time periods of the first cell includes: skipping, by the termina device, initiating the random access if the terminal device is in a radio link failure state within the power-saving time periods of the first cell.

Optionally, the sixth operation further includes: initiating, by the termina device, the random access in the transmission time periods of the first cell; or skipping, by the termina device, initiating the random access in the transmission time periods of the first cell if radio link quality of the terminal device is restored within the power-saving time periods of the first cell.

Optionally, a condition for restoring radio link quality of the terminal device is associated with a number of downlink synchronization indications monitored by the terminal device.

Optionally, the condition for restoring the radio link quality of the terminal device includes one or more of: the number of downlink synchronization indications being greater than a first threshold; a number of consecutive downlink synchronization indications being greater than a second threshold; and a number of downlink synchronization indications within one time window being greater than a third threshold.

Optionally, the condition for restoring the radio link quality of the terminal device is determined based on protocol predefined information or configuration information of a network device.

FIG. 12 is a schematic structural diagram of a network device according to an embodiment of the present disclosure. The network device 1200 shown in FIG. 12 may include a receiving module 1210.

The receiving module 1210 may be configured to receive a first buffer state report (BSR) sent by a terminal device, where the first BSR does not indicate first uplink data, and the first BSR is sent in a first transmission time period when the terminal device satisfies a first condition; where the first condition includes one or both of: a last transmission time corresponding to the first uplink data falling within a next transmission time period of the first transmission time period; and a time difference between the last transmission time corresponding to the first uplink data and a start time of the next transmission time period reaching a first time difference.

Optionally, the first BSR indicates the first uplink data if a second condition is satisfied, and the second condition includes one or both of: the last transmission time corresponding to the first uplink data falling before the next transmission time period of the first transmission time period; and the last transmission time corresponding to the first uplink data falling within the next transmission time period of the first transmission time period, and the time difference between the last transmission time corresponding to the first uplink data and the start time of the next transmission time period not reaching the first time difference.

Optionally, the first time difference is determined based on protocol predefined information or configuration information of the network device.

FIG. 13 is another schematic structural diagram of a network device according to an embodiment of the present disclosure. The network device 1300 shown in FIG. 13 may include a first receiving module 1310.

The first receiving module 1310 may be configured to receive first statistical information sent by a terminal device, where the first statistical information is used to indicate one or both of following uplink transmission delays of a first cell: a first uplink transmission delay, where the first uplink transmission delay is associated with power-saving time periods of the first cell; and a second uplink transmission delay, where the second uplink transmission delay is an uplink transmission delay other than the first uplink transmission delay in the uplink transmission delays.

Optionally, the first uplink transmission delay is an uplink transmission delay caused by the power-saving time periods of the first cell.

Optionally, the first uplink transmission delay is determined based on a first duration, and the first duration is a duration during which uplink data is stored in a buffer of the terminal device and the first cell is in the power-saving time periods.

Optionally, the second uplink transmission delay is determined based on a second duration, and the second duration is a duration during which uplink data is stored in a buffer of the terminal device and the first cell is in the transmission time periods.

Optionally, whether the uplink transmission delays include the first uplink transmission delay and the second uplink transmission delay is determined based on configuration information of the network device.

Optionally, the network device further includes a second receiving module 1320, configured to receive first capability information sent by the terminal device, where the first capability information is used to indicate that the terminal device is capable of collecting statistics on the first uplink transmission delay and the second uplink transmission delay.

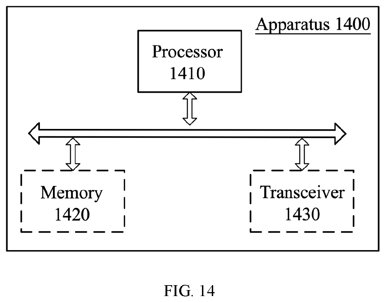

FIG. 14 is a schematic structural diagram of an apparatus for communication according to an embodiment of the present disclosure. The dashed line in FIG. 14 indicates that the unit or module is optional. The apparatus 1400 may be configured to implement the method described in the foregoing method embodiments. The apparatus 1400 may be one or more of a chip, a terminal device, or a network device.

The apparatus 1400 may include one or more processors 1410, and the processor 1410 may support the apparatus 1400 to implement the method described in the foregoing method embodiments. The processor 1410 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1400 may further include one or more memories 1420 storing a program, and the program may be executed by the processor 1410 to cause the processor 1410 to perform the method described in the foregoing method embodiments. The memory 1420 may be independent of the processor 1410 or may be integrated into the processor 1410.

The apparatus 1400 may further include a transceiver 1430, and the processor 1410 may communicate with another device or chip via the transceiver 1430. For example, the processor 1410 may perform data transmission/reception with another device or chip via the transceiver 1430.

Embodiments of the present disclosure further provide a computer-readable storage medium, configured to store a program. The computer-readable storage medium may be applied to the terminal device or network device provided in the embodiments of the present disclosure, and the program causes the computer to perform the method performed by the terminal device or network device in the embodiments of the present disclosure.

Embodiments of the present disclosure further provide a computer program product. The computer program product includes a program. The computer program product may be applied to the terminal device or network device provided in the embodiments of the present disclosure, and the program causes the computer to perform the method performed by the terminal device or network device in the embodiments of the present disclosure.

Embodiments of the present disclosure further provide a computer program. The computer program may be applied to the terminal device or network device provided in the embodiments of the present disclosure, and the computer program causes the computer to perform the method performed by the terminal device or network device in the embodiments of the present disclosure.

It should be understood that the terms "system" and "network" in the present disclosure may be used interchangeably. In addition, the terms used in the present disclosure are merely used to explain specific embodiments of the present disclosure, and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

It should be understood that the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" may indicate that there is a direct correspondence or indirect correspondence between the two, or may indicate that there is an association relationship between the two, or may be relationships such as indicating and being indicated, configuring and being configured, etc.

In the embodiments of the present disclosure, the term "including" may refer to directly including or may be indirectly including. Optionally, the "including" mentioned in the embodiments of the present disclosure may be replaced with "indicating" or "used to determine". For example, A includes B, may be replaced with A indicates B, or A is used to determine B.

It should be understood that the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

It should be understood that the term "protocol" in the embodiments of the present disclosure may refer to a standard protocol in the field of communications, such as an LTE protocol, an NR protocol, and related protocols applied to a future communications system, which is not limited in the present disclosure.

The term "and/or" in the embodiments of the present disclosure is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

It should be understood that in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for wireless communication, comprising:
obtaining, by a terminal device, first information, wherein the first information is used to indicate transmission time periods and power-saving time periods of a first cell; and
executing, by the terminal device, one or more of following operations based on the first information:
a first operation, wherein the first operation is related to a time alignment timer, TAT, of the terminal device;
a second operation, wherein the second operation is related to a hybrid automatic repeat request, HARQ, buffer of the terminal device;
a third operation, wherein the third operation is related to the terminal device triggering a buffer state report, BSR, and/or sending the BSR;
a fourth operation, wherein the fourth operation is related to transmission of the first information;
a fifth operation, wherein the fifth operation is related to uplink transmission delays of the terminal device; and
a sixth operation, wherein the sixth operation is related to the terminal device initiating random access.

2. The method according to claim 1, wherein the first operation includes: executing, by the terminal device, a suspension operation on the TAT.

3. The method according to claim 2, wherein the executing, by the terminal device, the suspension operation on the TAT includes:
suspending, by the terminal device, the TAT when a first transmission time period of the first cell ends; or
suspending, by the terminal device, the TAT when the first transmission time period of the first cell ends, if the TAT of the terminal device is in a running state.

4. The method according to claim 3, wherein the first operation further includes: continuing, by the terminal device, to run the TAT when a next transmission time period of the first transmission time period starts.

5. The method according to any one of claims 1 to 4, wherein the second operation includes: skipping, by the terminal device, clearing data in the HARQ buffer.

6. The method according to claim 5, wherein the skipping, by the terminal device, clearing the data in the HARQ buffer includes:
skipping, by the terminal device, clearing the data in the HARQ buffer if the TAT of the terminal device expires in a first power-saving time period.

7. The method according to any one of claims 1 to 6, wherein the terminal device executing the first operation or the second operation is determined based on one or more of:
protocol predefined information;
configuration information of a network device; and
indication information of the network device.

8. The method according to any one of claims 1 to 7, the third operation includes:
skipping, by the terminal device, triggering the BSR for first uplink data; and/or
sending, by the terminal device, a first BSR in a first transmission time period, wherein the first BSR does not indicate the first uplink data;
wherein the first uplink data is received by the terminal device in the first transmission time period or before the first transmission time period.

9. The method according to claim 8, wherein the third operation is executed when a first condition is satisfied, and the first condition includes one or both of:
a last transmission time corresponding to the first uplink data falling within a next transmission time period of the first transmission time period; and
a time difference between the last transmission time corresponding to the first uplink data and a start time of the next transmission time period reaching a first time difference.

10. The method according to claim 8 or claim 9, wherein the first BSR indicates the first uplink data if a second condition is satisfied, and the second condition includes one or both of:
a last transmission time corresponding to the first uplink data falling before a next transmission time period of the first transmission time period; and
the last transmission time corresponding to the first uplink data falling within the next transmission time period of the first transmission time period, and a time difference between the last transmission time corresponding to the first uplink data and a start time of the next transmission time period not reaching a first time difference.

11. The method according to claim 9 or claim 10, wherein the first time difference is determined based on protocol predefined information or configuration information of a network device.

12. The method according to any one of claims 8 to 11, further comprising:
triggering, by the terminal device, the BSR at a start time of each of the transmission time periods of the first cell.

13. The method according to any one of claims 8 to 11, further comprising:
triggering, by the terminal device, the BSR at a start time of a second transmission time period of the first cell if a third condition is satisfied;
wherein the third condition includes one of:
a buffer of the terminal device having data;
the buffer of the terminal device having new data;
the buffer of the terminal device having new data that is not reported to a network device;
new data arriving during a previous power-saving time period of the second transmission time period; and
data being deleted during the previous power-saving time period of the second transmission time period.

14. The method according to any one of claims 8 to 13, further comprising:
suspending, by the terminal device, a BSR-related timer when the terminal device enters the power-saving time periods.

15. The method according to claim 14, wherein the BSR-related timer includes one or more of:
a periodic BSR timer;
a retransmission BSR timer;
a logical channel scheduling request delay timer; and
a logical channel scheduling request delay timer for small data transmission.

16. The method according to any one of claims 1 to 15, wherein the first information is obtained by an access layer of the terminal device, and the fourth operation includes:
transmitting, by the access layer of the terminal device, the first information to an application layer of the terminal device.

17. The method according to claim 16, further comprising:
transmitting, by the application layer of the terminal device, the first information to an application server.

18. The method according to claim 16 or claim 17, wherein the first information is carried in a radio resource control, RRC, message, a medium access control control element, MAC CE, or downlink control information, DCI.

19. The method according to any one of claims 1 to 18, wherein the fifth operation includes:
sending, by the terminal device, first statistical information to a network device, wherein the first statistical information is used to indicate one or both of following uplink transmission delays of the first cell:
a first uplink transmission delay, wherein the first uplink transmission delay is associated with the power-saving time periods of the first cell; and
a second uplink transmission delay, wherein the second uplink transmission delay is an uplink transmission delay other than the first uplink transmission delay in the uplink transmission delays.

20. The method according to claim 19, wherein the first uplink transmission delay is an uplink transmission delay caused by the power-saving time periods of the first cell.

21. The method according to claim 19 or claim 20, wherein the first uplink transmission delay is determined based on a first duration, and the first duration is a duration during which uplink data is stored in a buffer of the terminal device and the first cell is in the power-saving time periods.

22. The method according to any one of claims 19 to 21, wherein the second uplink transmission delay is determined based on a second duration, and the second duration is a duration during which uplink data is stored in a buffer of the terminal device and the first cell is in the transmission time periods.

23. The method according to any one of claims 19 to 22, wherein whether the uplink transmission delays include the first uplink transmission delay and the second uplink transmission delay is determined based on configuration information of the network device.

24. The method according to any one of claims 19 to 23, further comprising:
sending, by the termina device, first capability information to the network device, wherein the first capability information is used to indicate that the terminal device is capable of collecting statistics on the first uplink transmission delay and the second uplink transmission delay.

25. The method according to any one of claims 1 to 24, t the sixth operation includes:
skipping, by the termina device, initiating the random access within the power-saving time periods of the first cell.

26. The method according to claim 25, wherein the skipping, by the termina device, initiating the random access within the power-saving time periods of the first cell includes:
skipping, by the termina device, initiating the random access if the terminal device is in a radio link failure state within the power-saving time periods of the first cell.

27. The method according to claim 26, wherein the sixth operation further includes:
initiating, by the termina device, the random access in the transmission time periods of the first cell; or
skipping, by the termina device, initiating the random access in the transmission time periods of the first cell if radio link quality of the terminal device is restored within the power-saving time periods of the first cell.

28. The method according to claim 27, wherein a condition for restoring the radio link quality of the terminal device is associated with a number of downlink synchronization indications monitored by the terminal device.

29. The method according to claim 28, wherein the condition for restoring the radio link quality of the terminal device includes one or more of:
the number of downlink synchronization indications being greater than a first threshold;
a number of consecutive downlink synchronization indications being greater than a second threshold; and
a number of downlink synchronization indications within one time window being greater than a third threshold.

30. The method according to claim 28 or claim 29, wherein the condition for restoring the radio link quality of the terminal device is determined based on protocol predefined information or configuration information of a network device.

31. A method for wireless communication, comprising:
receiving, by a network device, a first buffer state report, BSR, sent by a terminal device, wherein the first BSR does not indicate first uplink data, and the first BSR is sent in a first transmission time period when the terminal device satisfies a first condition;
wherein the first condition includes one or both of:
a last transmission time corresponding to the first uplink data falling within a next transmission time period of the first transmission time period; and
a time difference between the last transmission time corresponding to the first uplink data and a start time of the next transmission time period reaching a first time difference.

32. The method according to claim 31, wherein the first BSR indicates the first uplink data if a second condition is satisfied, and the second condition includes one or both of:
the last transmission time corresponding to the first uplink data falling before the next transmission time period of the first transmission time period; and
the last transmission time corresponding to the first uplink data falling within the next transmission time period of the first transmission time period, and the time difference between the last transmission time corresponding to the first uplink data and the start time of the next transmission time period not reaching the first time difference.

33. The method according to claim 31 or claim 32, wherein the first time difference is determined based on protocol predefined information or configuration information of the network device.

34. A method for wireless communication, comprising:
receiving, by a network device, first statistical information sent by a terminal device, wherein the first statistical information is used to indicate one or both of following uplink transmission delays of a first cell:
a first uplink transmission delay, wherein the first uplink transmission delay is associated with power-saving time periods of the first cell; and
a second uplink transmission delay, wherein the second uplink transmission delay is an uplink transmission delay other than the first uplink transmission delay in the uplink transmission delays.

35. The method according to claim 34, wherein the first uplink transmission delay is an uplink transmission delay caused by the power-saving time periods of the first cell.

36. The method according to claim 34 or claim 35, wherein the first uplink transmission delay is determined based on a first duration, and the first duration is a duration during which uplink data is stored in a buffer of the terminal device and the first cell is in the power-saving time periods.

37. The method according to any one of claims 34 to 36, wherein the second uplink transmission delay is determined based on a second duration, and the second duration is a duration during which uplink data is stored in a buffer of the terminal device and the first cell is in transmission time periods.

38. The method according to any one of claims 34 to 37, wherein whether the uplink transmission delays include the first uplink transmission delay and the second uplink transmission delay is determined based on configuration information of the network device.

39. The method according to any one of claims 34 to 38, further comprising:
receiving, by the network device, first capability information sent by the terminal device, wherein the first capability information is used to indicate that the terminal device is capable of collecting statistics on the first uplink transmission delay and the second uplink transmission delay.

40. A terminal device, comprising:
an obtaining module, configured to obtain first information, wherein the first information is used to indicate transmission time periods and power-saving time periods of a first cell; and
an execution module, configured to execute one or more of following operations based on the first information:
a first operation, wherein the first operation is related to a time alignment timer, TAT, of the terminal device;
a second operation, wherein the second operation is related to a hybrid automatic repeat request, HARQ, buffer of the terminal device;
a third operation, wherein the third operation is related to the terminal device triggering a buffer state report, BSR, and/or sending the BSR;
a fourth operation, wherein the fourth operation is related to transmission of the first information;
a fifth operation, wherein the fifth operation is related to uplink transmission delays of the terminal device; and
a sixth operation, wherein the sixth operation is related to the terminal device initiating random access.

41. The terminal device according to claim 40, wherein the first operation includes: executing, by the terminal device, a suspension operation on the TAT.

42. The terminal device according to claim 41, wherein the executing, by the terminal device, the suspension operation on the TAT includes:
suspending, by the terminal device, the TAT when a first transmission time period of the first cell ends; or
suspending, by the terminal device, the TAT when the first transmission time period of the first cell ends, if the TAT of the terminal device is in a running state.

43. The terminal device according to claim 42, wherein the first operation further includes: continuing, by the terminal device, to run the TAT when a next transmission time period of the first transmission time period starts.

44. The terminal device according to any one of claims 40 to 43, wherein the second operation includes: skipping, by the terminal device, clearing data in the HARQ buffer.

45. The terminal device according to claim 44, wherein the skipping, by the terminal device, clearing the data in the HARQ buffer includes:
skipping, by the terminal device, clearing the data in the HARQ buffer if the TAT of the terminal device expires in a first power-saving time period.

46. The terminal device according to any one of claims 40 to 45, wherein the terminal device executing the first operation or the second operation is determined based on one or more of:
protocol predefined information;
configuration information of a network device; and
indication information of the network device.

47. The terminal device according to any one of claims 40 to 46, wherein the third operation includes:
skipping, by the terminal device, triggering the BSR for first uplink data; and/or
sending, by the terminal device, a first BSR in a first transmission time period, wherein the first BSR does not indicate the first uplink data;
wherein the first uplink data is received by the terminal device in the first transmission time period or before the first transmission time period.

48. The terminal device according to claim 47, wherein the third operation is executed when a first condition is satisfied, and the first condition includes one or both of:
a last transmission time corresponding to the first uplink data falling within a next transmission time period of the first transmission time period; and
a time difference between the last transmission time corresponding to the first uplink data and a start time of the next transmission time period reaching a first time difference.

49. The terminal device according to claim 47 or claim 48, wherein the first BSR indicates the first uplink data if a second condition is satisfied, and the second condition includes one or both of:
a last transmission time corresponding to the first uplink data falling before a next transmission time period of the first transmission time period; and
the last transmission time corresponding to the first uplink data falling within the next transmission time period of the first transmission time period, and a time difference between the last transmission time corresponding to the first uplink data and a start time of the next transmission time period not reaching a first time difference.

50. The terminal device according to claim 48 or claim 49, wherein the first time difference is determined based on protocol predefined information or configuration information of a network device.

51. The terminal device according to any one of claims 47 to 50, further comprising:
a first triggering module, configured to trigger the BSR at a start time of each of transmission time periods of the first cell.

52. The terminal device according to any one of claims 47 to 50, further comprising:
a second triggering module, configured to trigger the BSR at a start time of a second transmission time period of the first cell if a third condition is satisfied;
wherein the third condition includes one of:
a buffer of the terminal device having data;
the buffer of the terminal device having new data;
new data arriving during a previous power-saving time period of the second transmission time period; and
data being deleted during the previous power-saving time period of the second transmission time period.

53. The terminal device according to any one of claims 47 to 52, further comprising:
a suspending module, configured to suspend a BSR-related timer when the terminal device enters the power-saving time periods.

54. The terminal device according to claim 53, wherein the BSR-related timer includes one or more of:
a periodic BSR timer;
a retransmission BSR timer;
a logical channel scheduling request delay timer; and
a logical channel scheduling request delay timer for small data transmission.

55. The terminal device according to any one of claims 40 to 54, wherein the first information is obtained by an access layer of the terminal device, and the fourth operation includes:
transmitting, by the access layer of the terminal device, the first information to an application layer of the terminal device.

56. The terminal device according to claim 55, further comprising:
a first transmission module, configured to transmit the first information from the application layer of the terminal device to an application server.

57. The terminal device according to claim 55 or claim 56, wherein the first information is carried in a radio resource control, RRC, message, a medium access control control element, MAC CE, or downlink control information, DCI.

58. The terminal device according to any one of claims 40 to 57, wherein the fifth operation includes:
sending, by the terminal device, first statistical information to a network device, wherein the first statistical information is used to indicate one or both of following uplink transmission delays of the first cell:
a first uplink transmission delay, wherein the first uplink transmission delay is associated with the power-saving time periods of the first cell; and
a second uplink transmission delay, wherein the second uplink transmission delay is an uplink transmission delay other than the first uplink transmission delay in the uplink transmission delays.

59. The terminal device according to claim 58, wherein the first uplink transmission delay is an uplink transmission delay caused by the power-saving time periods of the first cell.

60. The terminal device according to claim 58 or claim 59, wherein the first uplink transmission delay is determined based on a first duration, and the first duration is a duration during which uplink data is stored in a buffer of the terminal device and the first cell is in the power-saving time periods.

61. The terminal device according to any one of claims 58 to 60, wherein the second uplink transmission delay is determined based on a second duration, and the second duration is a duration during which uplink data is stored in a buffer of the terminal device and the first cell is in the transmission time periods.

62. The terminal device according to any one of claims 58 to 61, wherein whether the uplink transmission delays include the first uplink transmission delay and the second uplink transmission delay is determined based on configuration information of the network device.

63. The terminal device according to any one of claims 58 to 62, further comprising:
a sending module, configured to send first capability information to the network device, wherein the first capability information is used to indicate that the terminal device is capable of collecting statistics on the first uplink transmission delay and the second uplink transmission delay.

64. The terminal device according to any one of claims 40 to 63, wherein the sixth operation includes:
skipping, by the termina device, initiating the random access within the power-saving time periods of the first cell.

65. The terminal device according to claim 64, wherein the skipping, by the termina device, initiating the random access within the power-saving time periods of the first cell includes:
skipping, by the termina device, initiating the random access if the terminal device is in a radio link failure state within the power-saving time periods of the first cell.

66. The terminal device according to claim 65, wherein the sixth operation further includes:
initiating, by the termina device, the random access in the transmission time periods of the first cell; or
skipping, by the termina device, initiating the random access in the transmission time periods of the first cell if radio link quality of the terminal device is restored within the power-saving time periods of the first cell.

67. The terminal device according to claim 66, wherein a condition for restoring radio link quality of the terminal device is associated with a number of downlink synchronization indications monitored by the terminal device.

68. The terminal device according to claim 67, wherein the condition for restoring the radio link quality of the terminal device includes one or more of:
the number of downlink synchronization indications being greater than a first threshold;
a number of consecutive downlink synchronization indications being greater than a second threshold; and
a number of downlink synchronization indications within one time window being greater than a third threshold.

69. The terminal device according to claim 67 or claim 68, wherein the condition for restoring the radio link quality of the terminal device is determined based on protocol predefined information or configuration information of a network device.

70. A network device, comprising:
a receiving module, configured to receive a first buffer state report, BSR, sent by a terminal device, wherein the first BSR does not indicate first uplink data, and the first BSR is sent in a first transmission time period when the terminal device satisfies a first condition;
wherein the first condition includes one or both of:
a last transmission time corresponding to the first uplink data falling within a next transmission time period of the first transmission time period; and
a time difference between the last transmission time corresponding to the first uplink data and a start time of the next transmission time period reaching a first time difference.

71. The network device according to claim 70, wherein the first BSR indicates the first uplink data if a second condition is satisfied, and the second condition includes one or both of:
the last transmission time corresponding to the first uplink data falling before the next transmission time period of the first transmission time period; and
the last transmission time corresponding to the first uplink data falling within the next transmission time period of the first transmission time period, and the time difference between the last transmission time corresponding to the first uplink data and the start time of the next transmission time period not reaching the first time difference.

72. The network device according to claim 70 or claim 71, wherein the first time difference is determined based on protocol predefined information or configuration information of the network device.

73. A network device, comprising:
a first receiving module, configured to receive first statistical information sent by a terminal device, wherein the first statistical information is used to indicate one or both of following uplink transmission delays of a first cell:
a first uplink transmission delay, wherein the first uplink transmission delay is associated with power-saving time periods of the first cell; and
a second uplink transmission delay, wherein the second uplink transmission delay is an uplink transmission delay other than the first uplink transmission delay in the uplink transmission delays.

74. The network device according to claim 73, wherein the first uplink transmission delay is an uplink transmission delay caused by the power-saving time periods of the first cell.

75. The network device according to claim 73 or claim 74, wherein the first uplink transmission delay is determined based on a first duration, and the first duration is a duration during which uplink data is stored in a buffer of the terminal device and the first cell is in the power-saving time periods.

76. The network device according to any one of claims 73 to 75, wherein the second uplink transmission delay is determined based on a second duration, and the second duration is a duration during which uplink data is stored in a buffer of the terminal device and the first cell is in the transmission time periods.

77. The network device according to any one of claims 73 to 76, wherein whether the uplink transmission delays include the first uplink transmission delay and the second uplink transmission delay is determined based on configuration information of the network device.

78. The network device according to any one of claims 73 to 77, further comprising:
a second receiving module, configured to receive first capability information sent by the terminal device, wherein the first capability information is used to indicate that the terminal device is capable of collecting statistics on the first uplink transmission delay and the second uplink transmission delay.

79. A terminal device, comprising a memory and a processor, wherein the memory is configured to store a program, and the processor is configured to invoke the program in the memory to cause the terminal device to perform the method according to any one of claims 1 to 30.

80. A network device, comprising a transceiver, a memory, and a processor, wherein the memory is configured to store a program, and the processor is configured to invoke the program in the memory to cause the network device to perform the method according to any one of claims 31 to 39.

81. An apparatus, comprising a processor, wherein the processor is configured to invoke a program from a memory to cause the apparatus to perform the method according to any one of claims 1 to 39.

82. A chip, comprising a processor, wherein the processor is configured to invoke a program from a memory to cause a device installed with the chip to perform the method according to any one of claims 1 to 39.

83. A computer-readable storage medium storing a program, wherein the program causes a computer to perform the method according to any one of claims 1 to 39.

84. A computer program product, comprising a program, wherein the program causes a computer to perform the method according to any one of claims 1 to 39.

85. A computer program, wherein the computer program causes a computer to perform the method according to any one of claims 1 to 39.
